(19) 

Europäisches
Patentamt
European
Patent Office
Office européen
des brevets

(11) **EP 4 510 490 A1**

(12) **EUROPEAN PATENT APPLICATION**
published in accordance with Art. 153(4) EPC

(43) Date of publication:
**19.02.2025 Bulletin 2025/08**

(21) Application number: **23802659.5**

(22) Date of filing: **26.04.2023**

(51) International Patent Classification (IPC):
***H04L 5/00*** (2006.01)

(52) Cooperative Patent Classification (CPC):
**H04L 1/00; H04L 5/00; H04L 27/26**

(86) International application number:
**PCT/CN2023/090914**

(87) International publication number:
**WO 2023/216886 (16.11.2023 Gazette 2023/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.05.2022 CN 202210509427**

(71) Applicant: **Huawei Technologies Co., Ltd.
Shenzhen, Guangdong 518129 (CN)**

(72) Inventors:
 • YU, Jian
  **Shenzhen, Guangdong 518129 (CN)**
 • RUAN, Wei
  **Shenzhen, Guangdong 518129 (CN)**
 • LI, Yunbo
  **Shenzhen, Guangdong 518129 (CN)**
 • GAN, Ming
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS BASED ON PHYSICAL LAYER PROTOCOL
DATA UNIT**

(57) Disclosed are a communication method based on a PPDU and an apparatus. This application is applied to a wireless local area network system that supports 802.11 series protocols such as a next-generation Wi-Fi protocol of IEEE 802.11ax, for example, 802.11be, Wi-Fi 7, or EHT, and a next-generation Wi-Fi protocol of 802.11be or Wi-Fi 8, and may be further applied to a UWB-based wireless personal area network system, a sensing (sensing) system, and the like. The method includes: A transmit end generates the PPDU, and sends the PPDU. Correspondingly, a receive end receives the PPDU, and processes the PPDU. The PPDU may include an L-STF, an L-LTF, an L-SIG field, and a first STF. The first STF is obtained based on a second STF and a first sequence, and a time length of the first STF is greater than a time length of the L-STF. A transmission distance of the PPDU can be effectively increased.

FIG. 2

## Description

This application claims priority to Chinese Patent Application No. 202210509427.9, filed with the China National Intellectual Property Administration on May 11, 2022 and entitled "COMMUNICATION METHOD BASED ON PHYSICAL LAYER PROTOCOL DATA UNIT AND APPARATUS", which is incorporated herein by reference in its entirety.

## TECHNICAL FIELD

This application relates to the field of communication technologies, and in particular, to a communication method based on a physical layer (physical, PHY) protocol data unit (PHY protocol data unit, PPDU) and an apparatus.

## BACKGROUND

A Wi-Fi technology is a wireless local area network technology created by the Wi-Fi Alliance in Institute of Electrical and Electronics Engineers (Institute of Electrical and Electronics Engineers, IEEE) 802.11 protocols. The Wi-Fi technology generally involves two types of devices: an access point (access point, AP) and a station (station, STA). The AP may be also referred to as a wireless access point, is a provider of a Wi-Fi network, allows access of another wireless device, and provides data access for the accessed device. A device that accesses the Wi-Fi network may be referred to as the STA. For example, all electronic devices that support Wi-Fi functions, such as a mobile phone, a tablet computer, and a laptop computer, may be used as STAs.

User data transmission is performed between the AP and the STA via a PPDU. Currently, in six generations of Wi-Fi protocols (such as 801.11, 802.11b, 802.11a/g, 802.11n, 802.11ac, and 802.11ax) that have been developed and popularized, each generation of IEEE 802.11 protocol greatly improves communication quality and rate. For example, with PPDU transmission between the AP and the STA, a receive end may perform PPDU detection, channel estimation, time synchronization and frequency synchronization, and the like.

However, a transmission distance of the PPDU may be further extended.

## SUMMARY

This application provides a communication method based on a PPDU and an apparatus, to increase a transmission distance of a PPDU.

According to a first aspect, an embodiment of this application provides a communication method based on a PPDU. The method may be applied to a transmit end, and the method includes: generating the PPDU, where the PPDU includes a legacy short training field (legacy short training field, L-STF), a legacy long training field (legacy long training field, L-LTF), a legacy signal (legacy signal, L-SIG) field, and a first STF, the first STF is obtained based on a second STF and a first sequence, and a time length of the first STF is greater than a time length of the L-STF; and sending the PPDU.

According to a second aspect, an embodiment of this application provides a communication method based on a PPDU. The method may be applied to a receive end, and the method includes: receiving the PPDU, where the PPDU includes a legacy short training field L-STF, a legacy long training field L-LTF, a legacy signal L-SIG field, and a first STF, the first STF is obtained based on a second STF and a first sequence, and a time length of the first STF is greater than a time length of the L-STF; and processing the PPDU.

The first STF in the PPDU provided in embodiments of this application is obtained by extending the second STF by using the first sequence, so that the time length of the first STF is greater than the time length of the L-STF. The foregoing extension manner may be considered as weighted repetition of a signal in time domain. Therefore, when the receive end performs related processing based on the first STF, an equivalent signal-to-noise ratio can be increased (because signal energy is constant and noise is random, after superposition is performed on the first STF, the signal energy may be accumulated, but the noise is not accumulated. Therefore, the equivalent SNR increases). This ensures that the receive end can detect the PPDU at a longer range. Further, the PPDU provided in embodiments of this application can implement long-range transmission, increase a transmission distance of the PPDU, and increase a coverage area of a Wi-Fi signal.

With reference to the second aspect, in a possible implementation, the processing the PPDU includes at least one of the following: performing cross-correlation or auto-correlation on the first STF; and performing maximum likelihood combining on at least one of a first LTF, a first SIG field, and a first data field.

In this embodiment of this application, the receive end may perform cross-correlation or auto-correlation on the first STF in more STF periodicities, to increase the equivalent signal-to-noise ratio (signal-to-noise ratio, SNR). Performing maximum likelihood combining on the first LTF, the first SIG field, and the first data field can increase an equivalent signal-to-noise ratio for channel estimation.

With reference to the first aspect or the second aspect, in a possible implementation, that the first STF is obtained based on a second STF and a first sequence includes: The first STF is obtained based on the L-STF and the first sequence;

or the first STF is obtained based on an extremely high throughput EHT-STF and the first sequence; or the first STF is obtained based on a high efficient HE-STF and the first sequence.

With reference to the first aspect or the second aspect, in a possible implementation, that the first STF is obtained based on the L-STF and the first sequence includes: The first STF is obtained by extending an orthogonal frequency division multiplexing (orthogonal frequency division multiplexing, OFDM) symbol in the L-STF by using the first sequence; or the first STF is obtained by extending a part of an OFDM symbol in the L-STF by using the first sequence.

In this embodiment of this application, extending, based on the first sequence, the OFDM symbol or the part of the OFDM symbol in the second STF modulated through OFDM may be considered as weighted repetition of a signal in time domain. Therefore, the receive end can increase the equivalent signal-to-noise ratio by using an extended first STF, to detect the PPDU at the longer range. The first STF in this application is extended based on the OFDM symbol (or the part of the OFDM symbol), so that advantages of OFDM modulation can be retained. For example, OFDM modulation can help resist frequency selective fading and improve an anti-interference capability of the Wi-Fi signal. In addition, an existing design can be retained. For example, manners such as OFDM modulation-based coding, OFDM modulation-based interleaving, and OFDM modulation-based frequency-domain repetition can still be retained.

It should be noted that the OFDM symbol in the L-STF shown in embodiments of this application may also be referred to as an OFDM symbol occupied by the L-STF.

With reference to the first aspect or the second aspect, in a possible implementation, the PPDU further includes the first LTF, the first LTF is obtained based on a second LTF and a second sequence, and time length of the first LTF is greater than time length of the L-LTF.

In this embodiment of this application, the extending, based on the second sequence, an OFDM symbol or a part of an OFDM symbol in the second LTF modulated through OFDM may be considered as weighted repetition of a signal in time domain. Therefore, the receive end can increase the equivalent signal-to-noise ratio by using an extended first LTF, to detect the PPDU at the longer range.

With reference to the first aspect or the second aspect, in a possible implementation, that the first LTF is obtained based on a second LTF and a second sequence includes: The first LTF is obtained based on the L-LTF and the second sequence; or the first LTF is obtained based on an extremely high throughput (extremely high throughput, EHT)-LTF and the second sequence; or the first LTF is obtained based on a high efficient (high efficient, HE)-LTF and the second sequence.

With reference to the first aspect or the second aspect, in a possible implementation, that the first LTF is obtained based on a second LTF and a second sequence includes: The first LTF is obtained by extending the OFDM symbol in the second LTF by using the second sequence; or the first LTF is obtained by extending the part of the OFDM symbol in the second LTF by using the second sequence.

In this embodiment of this application, the second LTF is extended based on the OFDM symbol (or the part of the OFDM symbol), to obtain the first LTF. The advantages of OFDM modulation can be retained. For example, OFDM modulation can help resist frequency selective fading and improve the anti-interference capability of the Wi-Fi signal. In addition, the existing design can be retained. For example, the manners such as OFDM modulation-based coding, OFDM modulation-based interleaving, and OFDM modulation-based frequency-domain repetition can still be retained.

It should be noted that the OFDM symbol in the second LTF shown in embodiments of this application may also be referred to as an OFDM symbol occupied by the second LTF.

With reference to the first aspect or the second aspect, in a possible implementation, the PPDU further includes the first SIG field, a time length of the first SIG field is greater than a time length of the L-SIG field, and the first SIG field is obtained based on a fourth sequence and an OFDM symbol generated based on at least one piece of the following information: a service set color, an association identifier, a cyclic redundancy check, a tail bit, and a modulation and coding scheme.

With reference to the first aspect or the second aspect, in a possible implementation, the PPDU further includes the first data field, and the first data field is obtained based on a fifth sequence and an OFDM symbol generated based on an information bit.

With reference to the first aspect or the second aspect, in a possible implementation, the first sequence is obtained based on a Barker code, and/or the second sequence is obtained based on a Barker code.

With reference to the first aspect or the second aspect, in a possible implementation, the fourth sequence is obtained based on a Barker code.

With reference to the first aspect or the second aspect, in a possible implementation, the fifth sequence is obtained based on a Barker code.

In this embodiment of this application, a good correlation characteristic (for example, an auto-correlation characteristic or a cross-correlation characteristic) of the Barker code can help the receive end accurately detect the PPDU. It should be understood that, a process of identifying the PPDU is to distinguish, through correlation, whether the PPDU or the noise is received. Therefore, a correlation value of the PPDU is high, and a correlation value of the noise is low, so that accuracy of detecting the PPDU can be effectively improved.

With reference to the first aspect or the second aspect, in a possible implementation, the PPDU further includes a first binary phase shift keying (binary phase shift keying, BPSK) mark field and a second BPSK mark field; and the first BPSK mark field or the second BPSK mark field is the same as the L-SIG field; or the first BPSK mark field or the second BPSK mark field is obtained based on the L-SIG field and a third sequence.

With reference to the first aspect or the second aspect, in a possible implementation, elements in the third sequence include -1 and +1.

With reference to the first aspect or the second aspect, in a possible implementation, the PPDU further includes at least one of a repeated legacy signal (repeated legacy signal, RL-SIG) field or a universal signal (universal signal, U-SIG) field.

With reference to the first aspect or the second aspect, in a possible implementation, the U-SIG field includes at least one piece of the following information: a physical layer version of the PPDU and a format of the PPDU, where a version number of the physical layer version of the PPDU is greater than 0, and the format of the PPDU indicates that the format of the PPDU is an extended range PPDU format.

With reference to the first aspect or the second aspect, in a possible implementation, the L-STF, the L-LTF, and the L-SIG field are included in a first part of the PPDU, the first STF, the first LTF, and the first SIG field are included in a second part of the PPDU, and a bandwidth of the first part is greater than a bandwidth of the second part.

In this embodiment of this application, the bandwidth of the first part is greater than the bandwidth of the second part. Therefore, when power spectral density is not limited, a transmission distance of the second part can be effectively increased by reducing the transmission bandwidth of the second part of the PPDU and increasing the power spectral density, thereby increasing and the coverage area of the Wi-Fi signal.

According to a third aspect, an embodiment of this application provides a communication apparatus, configured to perform the method in the first aspect or any one of the possible implementations of the first aspect. The communication apparatus includes units that perform the method in the first aspect or any one of the possible implementations of the first aspect.

According to a fourth aspect, an embodiment of this application provides a communication apparatus, configured to perform the method in the second aspect or any one of the possible implementations of the second aspect. The communication apparatus includes units that perform the method in the second aspect or any one of the possible implementations of the second aspect.

In an example, in the third aspect or the fourth aspect, the communication apparatus may include a transceiver unit and a processing unit. For specific descriptions of the transceiver unit and the processing unit, refer to the apparatus embodiments shown below.

In another example, in the third aspect, the communication apparatus may include a generation unit and a sending unit. In the fourth aspect, the communication apparatus may include a receiving unit and a processing unit. For specific descriptions of the units, refer to the apparatus embodiments shown below.

According to a fifth aspect, an embodiment of this application provides a communication apparatus. The communication apparatus includes a processor, configured to perform the method shown in the first aspect or any one of the possible implementations of the first aspect. Alternatively, the processor is configured to execute a program stored in a memory. When the program is executed, the method shown in the first aspect or any one of the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to send a PPDU.

According to a sixth aspect, an embodiment of this application provides a communication apparatus. The communication apparatus includes a processor, configured to perform the method shown in the second aspect or any one of the possible implementations of the second aspect. Alternatively, the processor is configured to execute a program stored in a memory. When the program is executed, the method shown in the second aspect or any one of the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal and/or send a signal. For example, the transceiver may be configured to receive a PPDU.

According to a seventh aspect, an embodiment of this application provides a communication apparatus. The communication apparatus includes a logic circuit and an interface, and the logic circuit is coupled to the interface. The logic circuit is configured to generate a PPDU, and the interface is configured to output the PPDU.

Optionally, the communication apparatus further includes a memory, and the memory is configured to store at least one of a first sequence, a second sequence, a third sequence, a fourth sequence, and a fifth sequence.

Optionally, the communication apparatus further includes the memory, and the memory is configured to store at least one of a sequence carried in a first STF and a sequence carried in a first LTF.

According to an eighth aspect, an embodiment of this application provides a communication apparatus. The communication apparatus includes a logic circuit and an interface, and the logic circuit is coupled to the interface. The interface is configured to input a PPDU, and the logic circuit is configured to process the PPDU.

According to a ninth aspect, an embodiment of this application provides a computer-readable storage medium. The computer-readable storage medium is configured to store a computer program. When the computer program is run on a computer, the method shown in the first aspect or any one of the possible implementations of the first aspect is performed.

According to a tenth aspect, an embodiment of this application provides a computer-readable storage medium. The computer-readable storage medium is configured to store a computer program. When the computer program is run on a computer, the method shown in the second aspect or any one of the possible implementations of the second aspect is performed.

According to an eleventh aspect, an embodiment of this application provides a computer program product. The computer program product includes a computer program or computer code (which may also be referred to as instructions). When the computer program or computer code is run on a computer, the method shown in the first aspect or any one of the possible implementations of the first aspect is performed.

According to a twelfth aspect, an embodiment of this application provides a computer program product. The computer program product includes a computer program or computer code (which may also be referred to as instructions). When the computer program or computer code is run on a computer, the method shown in the second aspect or any one of the possible implementations of the second aspect is performed.

According to a thirteenth aspect, an embodiment of this application provides a computer program. When the computer program is run on a computer, the method shown in the first aspect or any one of the possible implementations of the first aspect is performed.

According to a fourteenth aspect, an embodiment of this application provides a computer program. When the computer program is run on a computer, the method shown in the second aspect or any one of the possible implementations of the second aspect is performed.

According to a fifteenth aspect, an embodiment of this application provides a wireless communication system. The wireless communication system includes a transmit end and a receive end. The transmit end is configured to perform the method shown in the first aspect or any one of the possible implementations of the first aspect. The receive end is configured to perform the method shown in the second aspect or any one of the possible implementations of the second aspect.

## BRIEF DESCRIPTION OF DRAWINGS

FIG. 1 is a diagram of a communication system according to an embodiment of this application;
FIG. 2 is a schematic flowchart of a communication method based on a PPDU according to an embodiment of this application;
FIG. 3a is a diagram of a structure of a PPDU according to an embodiment of this application;
FIG. 3b is a diagram of a structure of a PPDU according to an embodiment of this application;
FIG. 3c is a diagram of a structure of a PPDU according to an embodiment of this application;
FIG. 4a is a diagram of a structure of a PPDU according to an embodiment of this application;
FIG. 4b is a diagram of a structure of a PPDU according to an embodiment of this application;
FIG. 4c is a diagram of a structure of a PPDU according to an embodiment of this application;
FIG. 5 is a diagram of a structure of a PPDU according to an embodiment of this application;
FIG. 6a is a diagram of a structure of a PPDU according to an embodiment of this application;
FIG. 6b is a diagram of a structure of a PPDU according to an embodiment of this application;
FIG. 6c is a diagram of a structure of a PPDU according to an embodiment of this application;
FIG. 7a is a diagram of a structure of a PPDU according to an embodiment of this application;
FIG. 7b is a diagram of a structure of a PPDU according to an embodiment of this application;
FIG. 7c is a diagram of a structure of a PPDU according to an embodiment of this application;
FIG. 8 is a diagram of a structure of a communication apparatus according to an embodiment of this application;
FIG. 9 is a diagram of a structure of a communication apparatus according to an embodiment of this application;
FIG. 10 is a diagram of a structure of a communication apparatus according to an embodiment of this application; and

FIG. 11 is a diagram of a structure of a communication system according to an embodiment of this application.

**DESCRIPTION OF EMBODIMENTS**

To make the objectives, technical solutions, and advantages of this application clearer, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of' means two or more, and "at least two (items)" means two or three or more. "And/or" is used to describe an association relationship between associated objects, and indicates that three relationships may exist. For example, "A and/or B" may indicate: only A exists, only B exists, and both A and B exist. A and B may be singular or plural. The character "/" generally indicates an "or" relationship between the associated objects. "At least one of the following" or a similar expression thereof means any combination of these items. For example, at least one of a, b, or c may indicate: a, b, c, "a and b", "a and c", "b and c", or "a and b and c".

The technical solutions provided in this application may be applied to a wireless local area network (wireless local area network, WLAN) system, for example, Wi-Fi. For example, the method provided in this application is applicable to IEEE 802.11 series protocols such as an 802.11a/b/g protocol, an 802.11n protocol, an 802.11ac protocol, an 802.11 ax protocol, an 802.11be protocol, or a next-generation protocol. Examples are not enumerated herein. The technical solutions provided in this application may be further applied to a UWB technology-based wireless personal area network (wireless personal area network, WPAN). For example, the method provided in this application is applicable to IEEE 802.15 series protocols such as an 802.15.4a protocol, an 802.15.4z protocol, an 802.15.4ab protocol, or a future generation of UWB WPAN protocol. Examples are not enumerated herein. The technical solutions provided in this application may be further applied to various communication systems such as an internet of things (internet of things, IoT) system, a vehicle-to-X (vehicle-to-X, V2X) system, and a narrowband internet of things (narrowband internet of things, NB-IoT) system, and are applied to a device in vehicle-to-X, an internet of things node, a sensor, or the like in the internet of things (IoT, internet of things), a smart camera, a smart remote control, or a smart electricity/water meter in a smart home, a sensor in a smart city, and the like. The technical solutions provided in this application are further applicable to a long term evolution (long term evolution, LTE) system, a 5th generation (5th generation, 5G) communication system, a new communication system (for example, a 6G communication system) emerging in future communication development, and the like.

Although embodiments of this application are mainly described by using a WLAN as an example, and particularly, a network used in IEEE 802.11 series standards is used as an example for description. A person skilled in the art easily understands that, various aspects in this application may be extended to another network using various standards or protocols, for example, Bluetooth (Bluetooth), a high performance radio LAN (high performance radio LAN, HIPERLAN) (a wireless standard similar to the IEEE 802.11 standard, mainly used in Europe), a wide area network (WAN), or other networks known or developed in the future. Therefore, regardless of a used coverage area and a used wireless access protocol, various aspects provided in this application are applicable to any appropriate wireless network.

The method provided in this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, has a function of communicating or sensing with another device (for example, a station or another access point) in the WLAN network, and certainly, may further have a function of communicating or sensing with another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having the wireless communication function may be an entire device, or may be a chip or a processing system installed in the entire device. The device in which the chip or the processing system is installed may implement the method and a function in embodiments of this application under control of the chip or the processing system.

The AP in embodiments of this application is an apparatus that provides a service for the STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens of meters to 100-odd meters. It is clear that the access point may alternatively be deployed outdoors. For another example, the AP may be a communication entity, for example, a communication server, a router, a switch, or a bridge, or the AP may include various forms of macro base stations, micro base stations, relay stations, and the like. It is clear that the AP may alternatively be a chip or a processing system in these devices in various forms, to implement the method and the function in embodiments of this application. The access point in this application may be a HE AP or an EHT AP, or may be an access point applicable to a future Wi-Fi standard.

The station is an apparatus having a wireless communication function, supports communication or sensing by using the WLAN protocol, and has a capability of communicating or sensing with another station or the access point in the WLAN network. In the WLAN system, the station may be referred to as a non-access point station (non-access point station, non-AP STA). For example, the STA is any user communication device that allows a user to communicate with or sense an AP and further communicate with the WLAN. The apparatus having the wireless communication function may be an entire device, or may be a chip or processing system installed in the entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone, a tablet computer, a set-top box, a smart television, a smart wearable device, a vehicle-mounted communication device, or a computer supporting a Wi-Fi communication function.

The WLAN system can provide high-rate and low-latency transmission. With the continuous evolution of WLAN application scenarios, the WLAN system is to be applicable to more scenarios or industries, for example, the internet of things industry, the vehicle-to-X industry, the banking industry, enterprise offices, exhibition halls of stadiums, concert halls, hotel rooms, dormitories, wards, classrooms, supermarkets, squares, streets, production workshops and warehousing. It is clear that a device (for example, an access point or a station) supporting WLAN communication or sensing may be a sensor node (for example, a smart water meter, a smart electricity meter, or a smart air detection node) in a smart city, a smart device (for example, a smart camera, a projector, a display, a television, a stereo, a refrigerator, or a washing machine) in a smart home, a node in the internet of things, an entertainment terminal (for example, AR, VR, or another wearable device), a smart device (for example, a printer, a projector, a loudspeaker, or a stereo) in a smart office, an vehicle-to-X device in vehicle-to-X, infrastructure (for example, a vending machine, a self-service navigation station of a supermarket, a self-service cash register device, or a self-service ordering machine) in a daily life scenario, a device in a large sports and music venue, or the like. For example, the access point and the station each may be a device used in vehicle-to-X, an internet of things node, a sensor, or the like in the internet of things, a smart camera, a smart remote control, and a smart water/electricity meter in a smart home, a sensor in a smart city, or the like. Specific forms of the STA and the AP are not limited in embodiments of this application, and are merely examples for description herein.

For example, a communication system to which the method provided in this application may be applied may include an access point and a station. For example, this application is applicable to a scenario in which an AP communicates with or senses a STA in the WLAN. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. Both the AP and the STA may support WLAN communication protocols. The communication protocols may include the IEEE 802.11 series protocols, for example, is applicable to the 802.11be standard, and certainly, is also applicable to a standard later than 802.11be.

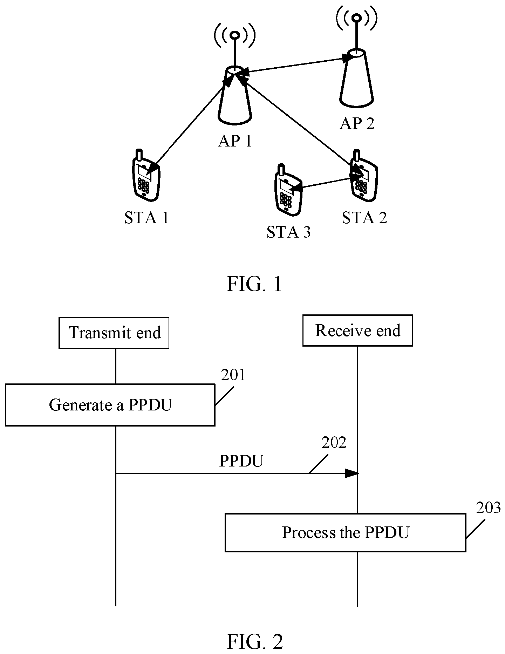

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA 3. It may be understood that the one or more APs may communicate with the one or more STAs. Certainly, an AP may communicate with an AP, and a STA may communicate with a STA.

It may be understood that, in FIG. 1, an example in which the STA is a mobile phone and the AP is a router is used, and this does not mean that a type of the AP and a type of the STA in this application are limited. In addition, FIG. 1 shows only two APs and three STAs as examples. However, there may be more or less APs or STAs. This is not limited in this application.

For ease of description, the following describes the method provided in embodiments of this application by using a transmit end and a receive end as examples. The transmit end may include the AP, and the receive end may include the STA; or the transmit end includes the STA, and the receive end includes the AP; or both the transmit end and the receive end are APs; or both the transmit end and the receive end are STAs.

It may be understood that symbols shown below may be referred to as OFDM symbols, and descriptions of the OFDM symbols may be as follows:

Orthogonal frequency division multiplexing is a multi-carrier transmission technology. The technology may use a large number of adjacent orthogonal subcarriers, and each subcarrier may be modulated by using a modulation technology. Therefore, the orthogonal frequency division multiplexing technology can implement high-rate transmission and can effectively resist frequency selective fading (frequency selective fading). In a WLAN communication protocol, each OFDM symbol may include at least one of the following: a pilot subcarrier (pilot subcarrier), a data subcarrier (data subcarrier), a direct current subcarrier, and a guard subcarrier. The pilot subcarrier is a subcarrier on which a sequence is placed or carried in an OFDM symbol, and the data subcarrier is a subcarrier on which data is placed or carried. In the communication system, the pilot subcarrier may be used to help detect and correct a subcarrier phase offset, to improve accuracy of data subcarrier resolution. The descriptions of the OFDM symbols are applicable to all the embodiments shown below.

FIG. 2 is a schematic flowchart of a communication method based on a PPDU according to an embodiment of this application. As shown in FIG. 2, the method includes the following steps.

201: A transmit end generates the PPDU.

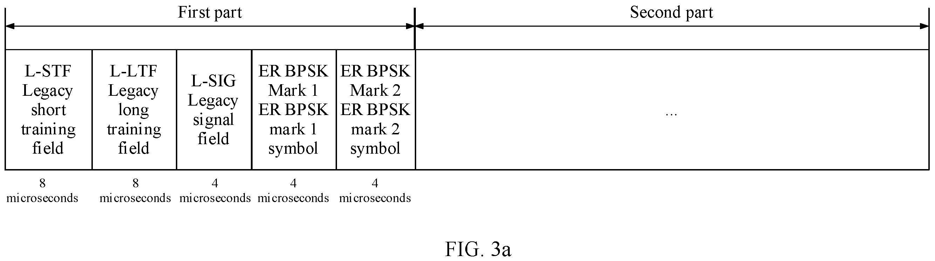

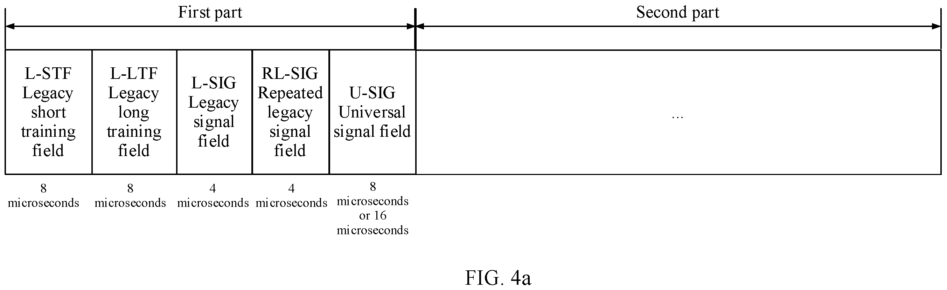

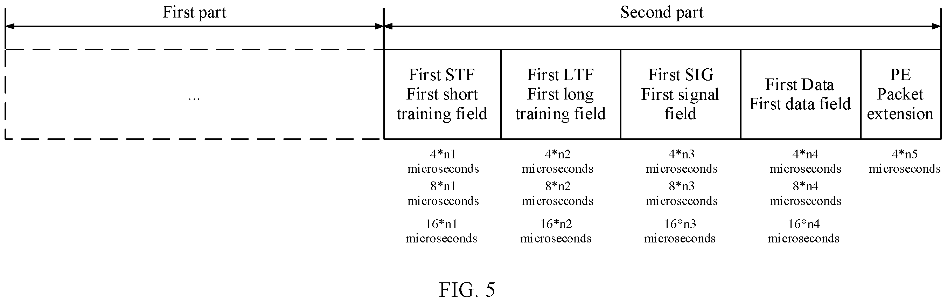

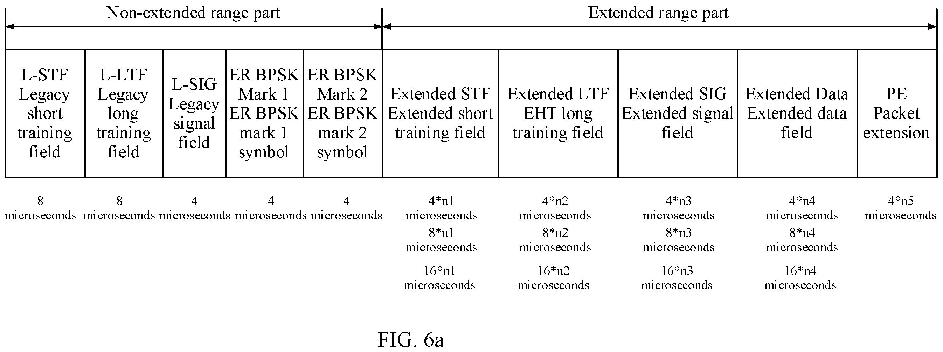

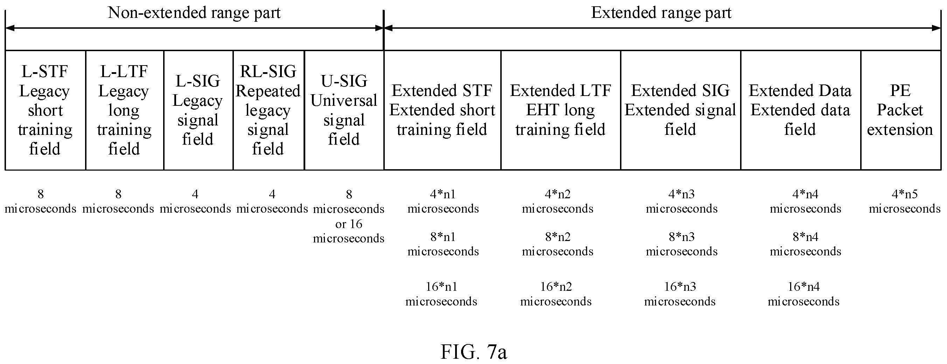

For specific descriptions of the PPDU, refer to the following descriptions. For example, for content of the PPDU, refer to the following descriptions in FIG. 3a to FIG. 3c, or refer to the following descriptions in FIG. 4a to FIG. 4c, or refer to the following description in FIG. 5, or refer to the following descriptions in FIG. 6a to FIG. 6c, or refer to the following descriptions in FIG. 7a to FIG. 7c.

202: The transmit end sends the PPDU, and correspondingly, a receive end receives the PPDU.

203: The receive end processes the PPDU.

The receive end may process the PPDU based on each field included in the PPDU, and different fields may have different processing manners. For a specific processing manner of the receive end, refer to the following descriptions. For example, the receive end may process the PPDU based on PPDUs shown in FIG. 3a to FIG. 3c, or process the PPDU based on PPDUs shown in FIG. 4a to FIG. 4c, or process the PPDU based on a PPDU shown in FIG. 5, or process the PPDU based on PPDUs shown in FIG. 6a to FIG. 6c, or process PPDUs based on PPDUs shown in FIG. 7a to FIG. 7c.

Based on the PPDUs provided in embodiments of this application, for example, the PPDUs shown in FIG. 3a to FIG. 3c, or the PPDUs shown in FIG. 4a to FIG. 4c, the receive end can clearly identify a physical layer version or a format of the PPDU. This can further maintain backward compatibility. Based on the PPDU shown in FIG. 5, the transmit end can implement long-range transmission. This further increases a transmission distance of the PPDU and increases a coverage area of a Wi-Fi signal. Therefore, even if a distance between the receive end and the transmit end is long, the receive end still correctly demodulates the PPDU. Based on the PPDUs shown in FIG. 6a to FIG. 6c or the PPDUs shown in FIG. 7a to FIG. 7c, backward compatibility can be ensured. In addition, the transmission distance of the PPDU can be increased, and the coverage area of the Wi-Fi signal can be increased.

The following describes in detail the PPDUs provided in embodiments of this application.

In some embodiments of this application, a PPDU is provided. The PPDU can ensure backward compatibility, and can further implement more functions such as a long-range transmission function or a high-rate transmission function. Embodiments of this application provide PPDUs in more formats, so that a next-generation device can effectively distinguish between new PPDUs (that is, the PPDUs provided in embodiments of this application) and old PPDUs (for example, PPDUs proposed before embodiments of this application, such as an EHT PPDU or an HE PPDU). In this way, a receive end automatically detects a format of the PPDU. Therefore, embodiments of this application provides the following two types of PPDUs.

A first-type PPDU may include an L-STF, an L-LTF, an L-SIG field, a first BPSK mark field, and a second BPSK mark field, as shown in FIG. 3a to FIG. 3c. For specific descriptions of a first BPSK mark 1 field and a second BPSK mark 2 field, refer to the following descriptions of an extended range (extended range, ER) BPSK mark 1 field and an ER BPSK mark 2 field.

The first BPSK mark field and the second BPSK mark field each may occupy one OFDM symbol. When the two fields each occupy one OFDM symbol, the first BPSK mark field may also be referred to as a first BPSK mark symbol, and the second BPSK mark field may also be referred to as a second BPSK mark symbol. The OFDM symbol shown above is merely an example. For ease of description, the following provides descriptions by using the first BPSK mark field as an ER BPSK mark 1 (ER BPSK mark 1) field, and using the second BPSK mark field as an ER BPSK mark 2 (ER BPSK mark 2) field. Certainly, the first BPSK mark field and the second BPSK mark field may alternatively have other names or replacement manners. This is not limited in embodiments of this application. The ER BPSK mark 1 field and the ER BPSK mark 2 field may be implemented in the following manners:

Implementation 1: The ER BPSK mark 1 field and the ER BPSK mark 2 field may be different. One of the ER BPSK mark 1 field or the ER BPSK mark 2 field may be the same as the L-SIG field, and the other of the ER BPSK mark 1 field or the ER BPSK mark 2 field may not be the same as the L-SIG field.

In an example, the ER BPSK mark 1 field is the same as the L-SIG field, and the ER BPSK mark 2 field is obtained by multiplying data subcarriers in the L-SIG field by a sequence in which elements include -1 (which is merely an example). For a wake-up radio (wake-up radio, WUR) PPDU, a BPSK mark 1 field and a BPSK mark 2 field in the WUR PPDU each are obtained by multiplying data subcarriers in an L-SIG field by a sequence in which an element is -1. The sequence in which the element is -1 shown herein may also be understood as follows: All elements in the sequence are -1. However, at least one of the ER BPSK mark 1 field and the ER BPSK mark 2 field shown in embodiments of this application is different from the BPSK mark 1 field and the BPSK mark 2 field in the WUR PPDU, so that the PPDU shown in embodiments of this application can be distinguished from the WUR PPDU.

The PPDU shown in embodiments of this application may be further distinguished from the HE PPDU and the EHT PPDU. For example, a first symbol following an L-SIG field in the HE PPDU is the same as the L-SIG field, and a second symbol following the L-SIG field is an HE-SIG-A field. A second symbol following the L-SIG field in the PPDU provided in embodiments of this application is obtained by multiplying data subcarriers in the L-SIG field by the sequence in which the elements include -1. Therefore, the PPDU provided in embodiments of this application is different from the HE PPDU. In this way, the receive end can distinguish between the HE PPDU and the PPDU provided in embodiments of this application based on the ER BPSK mark 2 field. For another example, a first symbol following the EHT PPDU is the same as the L-SIG field, and a second symbol following the L-SIG field is a first symbol in a U-SIG field. Therefore, the PPDU provided in embodiments of this application is different from the EHT PPDU. In this way, the receive end can distinguish between the EHT PPDU and the PPDU provided in embodiments of this application based on the ER BPSK mark 2 field. It may be understood that the following descriptions are also applicable to differentiation between the PPDU shown in embodiments of this application and the WUR PPDU, the HE PPDU, and the EHT PPDU.

In another example, the ER BPSK mark 2 field may be the same as the L-SIG field, and the ER BPSK mark 1 field is obtained by multiplying data subcarriers in the L-SIG field by a sequence in which elements include - 1. In this manner, the receive end may distinguish, based on the BPSK mark 1 field, the PPDU provided in embodiments of this application from a PPDU in another format.

It may be understood that "the ER BPSK mark 2 field or the ER BPSK mark 1 field shown in embodiments of this application is obtained by multiplying the data subcarriers in the L-SIG field by the sequence in which the elements include -1". "The sequence in which the elements include -1" is merely an example. For example, the sequence in which the elements include -1 may be alternatively replaced with a sequence in which elements include +1 and -1 (which may also be understood as a sequence including +1 and -1), or a sequence in which elements include +1, 0, and -1 (which may also be understood as a sequence including +1, 0, and -1). It may be understood that the sequences shown herein are different not only in terms of included elements, but also in terms of values and sequences of elements in the sequences. For example, the sequence in which the elements include +1 and -1 may include +1, -1, +1, -1, or may include -1, +1, -1, +1. Examples are not enumerated herein.

It may be understood that, that a field A shown in embodiments of this application is the same as a field B may be understood as follows: A sequence carried in the field A is the same as a sequence carried in the field B. For example, that the ER BPSK mark 1 field is the same as the L-SIG field may be understood as follows: A sequence carried in the ER BPSK mark 1 field is the same as a sequence carried in the L-SIG field.

Implementation 2: The ER BPSK mark 1 field and the ER BPSK mark 2 field may be the same. For example, the ER BPSK mark 1 field and the ER BPSK mark 2 field each may be obtained by multiplying data subcarriers in the L-SIG field by a sequence in which an element is +1. For another example, the ER BPSK mark 1 field and the ER BPSK mark 2 field each may be obtained by sequentially multiplying data subcarriers in the L-SIG field by a mixed sequence including +1 and -1. For still another example, the ER BPSK mark 1 field and the ER BPSK mark 2 field each may be obtained by sequentially multiplying data subcarriers in the L-SIG field by a mixed sequence including -1 and +1 (it should be noted that an order of the mixed sequence shown herein is different from that of the foregoing mixed sequence). In this implementation, implementation is simple, and a same operation may be performed on the ER BPSK mark 1 field and the ER BPSK mark 2 field.

It should be noted that, that the ER BPSK mark 1 field (or the ER BPSK mark 2 field) shown above is the same as the L-SIG field may also be understood as follows: The ER BPSK mark 1 field (or the ER BPSK mark 2 field) may be obtained by multiplying the L-SIG field by the sequence in which the element is +1. In other words, when a transmit end generates a PPDU, an ER BPSK mark 1 field is obtained by multiplying an L-SIG field by a sequence in which an element is +1, or a sequence in an L-SIG field is directly used an ER BPSK mark 1 field. However, regardless of which manner is used, a final result is that the ER BPSK mark 1 field is the same as the L-SIG field. Therefore, the two manners are not specifically distinguished in embodiments of this application.

Implementation 3: The ER BPSK mark 1 field or the ER BPSK mark 2 field is obtained based on the L-SIG field and a third sequence. Optionally, elements in the third sequence may include +1 and -1 (which may also be understood as follows: The third sequence includes +1 and -1). Optionally, elements in the third sequence may include +1, 0, and -1 (which may also be understood as follows: The third sequence includes +1, 0, and -1). It may be understood that the third sequence shown herein shows only an example of an element, and a specific value of each element in the third sequence is not limited in embodiments of this application.

In an example, one of the ER BPSK mark 1 field or the ER BPSK mark 2 field is obtained based on the L-SIG field and the third sequence, and the other of the ER BPSK mark 1 field or the ER BPSK mark 2 field is obtained based on the L-SIG field and a sequence in which elements include -1. For example, the ER BPSK mark 1 field may be obtained by multiplying, in an order (and may also be understood as sequentially), data subcarriers in the L-SIG field by a sequence including +1 and -1. The ER BPSK mark 2 field may be obtained by multiplying the L-SIG field by the sequence in which the elements include -1.

In another example, one of the ER BPSK mark 1 field or the ER BPSK mark 2 field is obtained based on the L-SIG field and a sequence in which elements include +1 and -1, and the other of the ER BPSK mark 1 field or the ER BPSK mark 2 field is obtained based on the L-SIG field and a sequence in which elements include +1, 0, and -1.

In still another example, the ER BPSK mark 1 field and the ER BPSK mark 2 field each are obtained based on a sequence in which elements include +1 and -1. However, a value of at least one element in a sequence used by the ER BPSK mark 1 field is different from a value of an element at a corresponding location in a sequence used by the BPSK mark 2 field. For example, the sequence used by the ER BPSK mark 1 field includes +1, -1, +1, - 1. A length of the sequence is not limited in embodiments of this application. The sequence used by the ER BPSK mark 2 field includes -1, +1, -1, +1. Examples are not enumerated herein.

Based on the ER BPSK mark 1 field and the ER BPSK mark 2 field that are shown above, the receive end may identify, by multiplying the first symbol and/or the second symbol following the L-SIG field by a corresponding sequence, a type of the PPDU received by the receive end. The sequence herein may be a sequence in which elements include -1, a sequence in which elements include +1 and -1, or a sequence in which elements include +1, 0, and -1. Based on the ER BPSK mark 1 field and the ER BPSK mark 2 field that are shown above, after receiving the PPDU, the receive end (for example, a third-party device) may identify a format, a physical layer version, or the like of the PPDU based on the ER BPSK mark 1 field and the ER BPSK mark 2 field.

A length of each sequence shown above may be determined based on an OFDM symbol. If the foregoing sequence needs to be applied to a data subcarrier, a length of the sequence may be 48 bits, in other words, the sequence includes 48 elements. If the foregoing sequence needs to be applied to a data subcarrier and a pilot subcarrier, a length of the sequence may be 52 bits, in other words, the sequence includes 52 elements. It may be understood that when a number of data subcarriers and/or a number of pilot subcarriers change/changes, the length of the sequence may also change.

It should be noted that names of the ER BPSK mark 1 field and the ER BPSK mark 2 field shown in embodiments of this application are merely examples. For example, the names of the ER BPSK mark 1 field and the ER BPSK mark 2 field may alternatively have other names based on a specific function, format or physical layer version of the PPDU. For example, the PPDU is an extended range PPDU or a long range (long range, LR) PPDU. In this case, the ER BPSK mark 1 field may also be replaced with an extended BPSK mark 1 field, an LR BPSK mark 1 field, or the like, and the ER BPSK mark 2 field may also be replaced with an extended BPSK mark 2 field, an LR BPSK mark 2 field, or the like. Examples are not enumerated herein.

In an example, FIG. 3a is a diagram of a structure of a PPDU according to an embodiment of this application. As shown in FIG. 3a, an L-STF, an L-LTF, an L-SIG field, an ER BPSK mark 1 field, and an ER BPSK mark 2 field shown in this embodiment of this application may be included in a first part of the PPDU. For example, sending time lengths of the L-STF and the L-LTF each may be 8 microseconds, and sending time lengths of the L-SIG field, the ER BPSK mark 1 field, and of the ER BPSK mark 2 field each may be 4 microseconds. If sending one OFDM symbol needs 4 microseconds, the L-STF and the L-LTF each may occupy two OFDM symbols, and the L-SIG field, the ER BPSK mark 1 field, and the ER BPSK mark 2 field each may occupy one OFDM symbol.

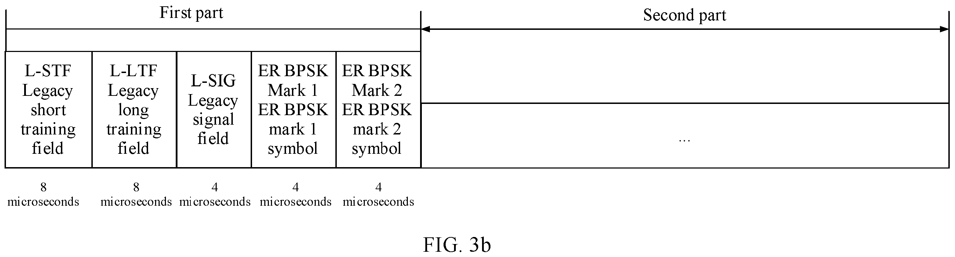

In another example, FIG. 3b is a diagram of a structure of a PPDU according to an embodiment of this application. As shown in FIG. 3b, a bandwidth for transmitting a second part of the PPDU may be less than a bandwidth for transmitting a first part of the PPDU. Therefore, when power spectral density is not limited, a transmission distance of the second part can be effectively increased by reducing the transmission bandwidth of the second part of the PPDU and increasing the power spectral density, thereby increasing a coverage area of a Wi-Fi signal. For example, one resource unit (resource unit, RU) or multiple resource unit (multiple resource unit, MRU) is used for transmission. A size of the RU or the MRU may be a 26-tone RU, a 52-tone RU, a 52+26-tone MRU, a 106-tone RU, or a 106+26-tone MRU. It may be understood that an example of the RU or the MRU shown herein is shown by using an RU or an MRU in 20 MHz as an example, and a case of a bandwidth 40 MHz or 80 MHz is not enumerated herein. For example, if the bandwidth is greater than 20 MHz, replication may be performed based on a distribution status of 20 MHz, to obtain a distribution status of 40 MHz, a distribution status of 80 MHz, or the like.

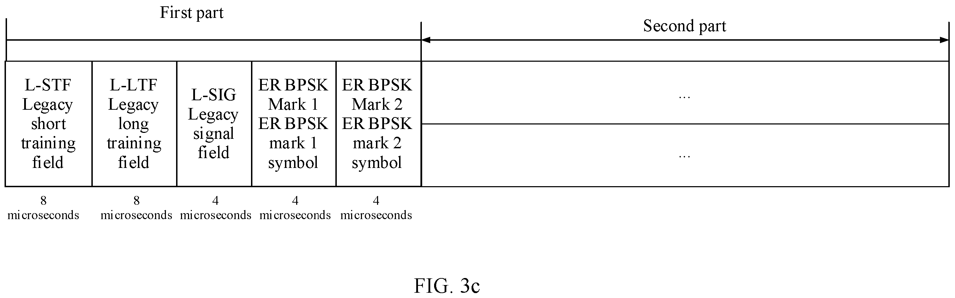

In still another example, FIG. 3c is a diagram of a structure of a PPDU according to an embodiment of this application. As shown in FIG. 3c, a second part of the PPDU may be repeatedly sent in frequency domain. The second part shown in FIG. 3c is repeatedly sent in frequency domain. Therefore, it may also be considered that the second part is implemented through frequency-domain replication. In this manner, the receive end may perform maximum-ratio combining (maximum-ratio combining, MRC) in frequency domain, to increase a transmission distance and a coverage area of a Wi-Fi signal.

It may be understood that content of the second part of the PPDU may be determined based on a format or a physical layer version of the PPDU. This is not limited in embodiments of this application. For example, for the content of the second part of the PPDU, refer to the following descriptions in FIG. 5, FIG. 6a to FIG. 6c, and FIG. 7a to FIG. 7c.

The following describes in detail processing of the PPDU by different devices.

The receive end shown in embodiments of this application may include a target receive end and the third-party device. The target receive end may be understood as a sending object of the transmit end (or a receiving object of the PPDU). The third-party device may include a device that can identify the PPDU and/or a device that cannot identify the PPDU.

In an example, the ER BPSK mark 1 field and the ER BPSK mark 1 field may be used to spoof (spoof) a high throughput device (or a higher-level backward compatible device, which may also be referred to as the high throughput device) to prevent incorrect PPDU format detection. After receiving the PPDU provided in embodiments of this application, the device that cannot identify the PPDU (for example, a legacy device or a device that does not support long-range transmission of the PPDU) cannot not identify the PPDU, and therefore "identifies" the PPDU as a non-high throughput PPDU, that is, a legacy PPDU, including an L-STF, an L-LTF, an L-SIG field, and a data Data field.

In another example, the device that can identify the PPDU may identify, based on the ER BPSK mark 1 field and the ER BPSK mark 2 field, that the PPDU is an extended range PPDU, a long range PPDU, or the like.

In still another example, after receiving the PPDU, the third-party device may further identify the physical layer version of the PPDU, the format of the PPDU, or the like based on the ER BPSK mark 1 field and the ER BPSK mark 1 field, to learn that the PPDU is not sent to the third-party device. Therefore, the third-party device may terminate transmission in advance to save energy. After receiving the PPDU provided in embodiments of this application, the third-party device identifies the PPDU, and calculates a length of the PPDU based on the L-STF, the L-LTF, and the L-SIG field, so that in a transmission process of the PPDU, the third-party device keeps a non-sending state (which may also be understood as a silent state), to prevent interference to transmission of the PPDU, thereby implementing backward compatibility. It may be understood that a distance between the third-party device and the transmit end may be shorter than a distance between the target receive end and the transmit end.

In yet another example, if a distance between the transmit end and the target receive end is long (longer than a distance between the transmit end and the third-party device), the target receive end may mistakenly consider that the first part of the PPDU is noise. Therefore, the target receive end cannot effectively obtain the first part of the PPDU. Certainly, if a target between the transmit end and the target receive end is close, the target receive end may also receive the PPDU, and obtain the first part of the PPDU. Therefore, at least one of the following is learned based on the first part of the PPDU: the format of the PPDU and the physical layer version of the PPDU.

It may be understood that the foregoing descriptions about the target receive end and the third-party device are also applicable to a second-type PPDU shown below.

Based on the first part of the PPDU shown in embodiments of this application, the third-party device or the target receive end that can receive the PPDU may perform the following processing:

For example, after receiving the PPDU, the third-party device may identify the L-SIG field and the ER BPSK mark 1 field. If the L-SIG field is the same as the ER BPSK mark 1 field, and the ER BPSK mark 2 field is not an HE-SIG-A field, the third-party device may identify the format of the PPDU or the physical layer version of the PPDU. For example, the PPDU is an extended range PPDU, or the PPDU is an extremely long range PPDU, or the PPDU is a PPDU in Wi-Fi 8. The format, the physical layer version, or a name of the PPDU is not limited in embodiments of this application.

For another example, after receiving the PPDU, the third-party device separately multiplies a data subcarrier in the L-SIG field by a sequence in which an element is -1 to obtain a sequence A, and multiplies a data subcarrier in the L-SIG field by a sequence in which an element is +1 to obtain a sequence B; and then determines a relationship between the sequence A, the sequence B, a sequence including data subcarriers in the ER BPSK mark 1 field, and a sequence including data subcarriers in the ER BPSK mark 2 field. If the sequence A is separately the same as the ER BPSK mark 1 field and the ER BPSK mark 2 field, in other words, the sequence A is the same as both the ER BPSK mark 1 field and the ER BPSK mark 2 field, or a probability that the sequence A is the same as the ER BPSK mark 1 field and the ER BPSK mark 2 field is greater than a first probability, it may be determined that the PPDU is a WUR PPDU. If the sequence A is the same as the ER BPSK mark 1 field, and the sequence B is the same as the ER BPSK mark 2 field, or a probability that the sequence B is the same as the ER BPSK mark 2 field is greater than a second probability, it may be determined that the PPDU is an ER PPDU. It may be understood that the first probability (for example, 90%, 95%, or 99%) and the second probability (for example, 90%, 95%, or 99%) shown above are merely examples. The first probability and the second probability may be the same or different. This is not limited in embodiments of this application.

For still another example, after receiving the PPDU, the third-party device may separately multiply the first symbol (or the second symbol) following the L-SIG field by a sequence in which an element is -1 to obtain a sequence C, and multiply the first symbol (or the second symbol) following the L-SIG field by a sequence in which elements include +1 and -1 to obtain a sequence D; and then determine a relationship between the sequence C and the L-SIG field and a relationship between the sequence D and the L-SIG field. If the sequence C is the same as the L-SIG field, or a probability that the sequence C is the same as the L-SIG field is greater than a probability, it may be determined that the PPDU is a WUR PPDU. If the sequence D is the same as the L-SIG field, or a probability that the sequence D is the same as the L-SIG field is greater than a probability, it may be determined that the PPDU is an ER PPDU.

It may be understood that the foregoing manner of processing the PPDU by the third-party device is merely an example. The target receive end may further, for example, perform PPDU detection, automatic gain control, and coarse time synchronization and coarse frequency synchronization based on the L-STF; for another example, perform channel estimation and fine time synchronization and fine frequency synchronization based on the L-LTF; and for still another example, obtain, based on the L-SIG field, signaling information required for demodulating a subsequent data part. Examples are not enumerated herein. For descriptions of the L-STF, the L-LTF, and the L-SIG field, refer to a related protocol and the like. This is not limited in embodiments of this application.

A second-type PPDU may include an L-STF, an L-LTF, an L-SIG field, an RL-SIG field, and a U-SIG field, as shown in FIG. 4a to FIG. 4c. The U-SIG field may be described as follows:

The U-SIG field includes at least one piece of the following information: a physical layer version of the PPDU and a format of the PPDU. A version number of the physical layer version of the PPDU may be greater than 0, or the physical layer version of the PPDU may indicate that the PPDU is an EHT PPDU or a PPDU in a subsequent generation of standard. The U-SIG field may exist in a PPDU in the 802.11be standard and subsequent generations of standards. For example, if the U-SIG field in which the physical layer version is located indicates 1, it indicates that the PPDU is a Wi-Fi 8 PPDU. The format of the PPDU indicates that the format of the PPDU is an extended range PPDU format, or indicates that the format of the PPDU is a format in the Wi-Fi 8 PPDU. For example, the U-SIG field may further include a transmission opportunity, a basic service set color, and the like. The transmission opportunity may be used to recommend a transmission opportunity, to prevent a third-party device from interfering with transmission in the transmission opportunity, thereby achieving a better transmission protection effect.

For example, content of the L-SIG field may be the same as that of the RL-SIG field, for example, a length may be a multiple of 3. The L-SIG field may include a length field and a rate field, and the length field and the rate field may be used for a time length of a subsequent remaining part of the L-SIG field. For example, the receive end may calculate the time length of the subsequent part of the L-SIG field based on the length field and the rate field. The L-SIG field includes the length (length) field and the rate (rate) field. A transmit end may indirectly indicate an originally-defined transmission time length of the PPDU based on the length field and the rate field in the L-SIG field. The rate field may be fixedly set to 6 megabits per second (megabits per second, Mbps). Because the rate field is set to a fixed value, a transmission time length of the PPDU is indirectly indicated by using the length field. A formula for calculating the transmission time length Length of the length field is as follows:

$$\text{Length} = \left\lceil \frac{\text{TXTIME-SignalExtension-20}}{4} \right\rceil \times 3 - 3 - m$$

SignalExtension (signal extension) is a parameter related to a transmission frequency band. When a device operates in 2.4 GHz, the parameter is 6 μs (microsecond). When the device operates at 5 GHz or 6 GHz, the parameter is 0 μs. TXTIME represents the originally-defined transmission time length of the entire PPDU. For the PPDU shown in embodiments of this application, m=0 (it can be seen from the foregoing formula that the length is a multiple of 3). A value of m may be used by the receive end to distinguish from an HE PPDU in an automatic detection process. For example, for the HE PPDU, the value of m is 1 or 2.

It may be understood that the foregoing description of indicating the transmission time length of the PPDU is merely an example, and should not be construed as a limitation on embodiments of this application.

It should be noted that, for ease of description, in embodiments shown in this application, the "field" is used as an example, and the "field" and the " subfield" are not specifically distinguished. Although the "field" and the "subfield" are not specifically distinguished in embodiments shown in this application, a person skilled in the art may adaptively distinguish between a relationship between the fields shown in this application.

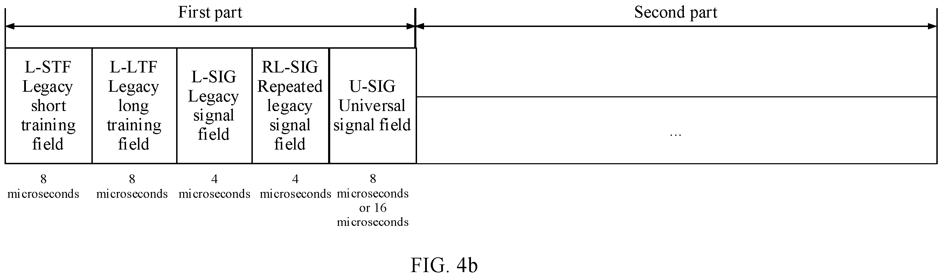

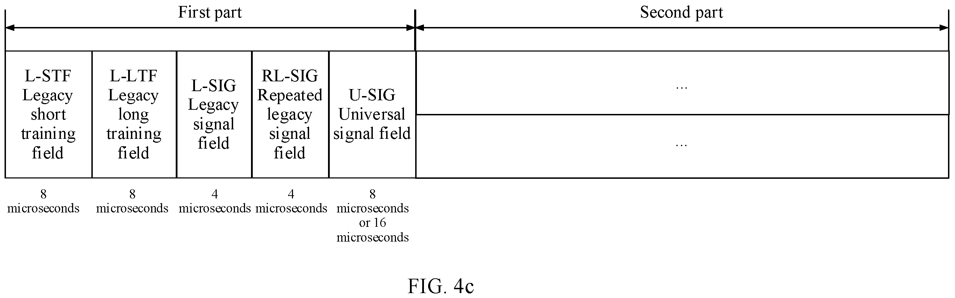

FIG. 4a is a diagram of a structure of a PPDU according to an embodiment of this application. As shown in FIG. 4a, an L-STF, an L-LTF, an L-SIG field, an RL-SIG field, and a U-SIG field shown in this embodiment of this application may be included in a first part of the PPDU. For example, sending time lengths of the L-STF and the L-LTF each may be 8 microseconds, sending time lengths of the L-SIG field and the RL-SIG field each may be 4 microseconds, and a sending time length of the U-SIG field may be 8 microseconds or 16 microseconds. Optionally, FIG. 4b is a diagram of a structure of a PPDU according to an embodiment of this application. Optionally, FIG. 4c is a diagram of a structure of a PPDU according to an embodiment of this application. For descriptions of FIG. 4b and FIG. 4c, refer to FIG. 3b and FIG. 3c. Details are not described herein again. A second part of the PPDU is not limited in embodiments of this application. For example, refer to the following descriptions in FIG. 5, FIG. 6a to FIG. 6c, and FIG. 7a to FIG. 7c.

The following describes in detail processing of the PPDU by different devices. It may be understood that for specific descriptions of a target receive end and the third-party device, refer to the foregoing descriptions of the first-type PPDU. Details are not described herein again.

Based on the first part of the PPDU shown in embodiments of this application, the third-party device or the target receive end that can receive the PPDU may perform the following processing:

For example, after receiving the PPDU, the third-party device may parse the version number indicated in the U-SIG field. If the version number is greater than 0, for example, the version number is 1, it may be determined that the PPDU is a PPDU in Wi-Fi 8. If the version number is equal to 0, it may be determined that the PPDU is an EHT PPDU (which is merely an example).

For another example, after receiving the PPDU, the third-party device may parse the format of the PPDU indicated in the U-SIG field. For example, for downlink transmission, if the format indicated in the U-SIG field is 0, it may indicate that the PPDU is single-user transmission; if the format indicated in the U-SIG field is 1, it indicates that the PPDU is multi-user orthogonal frequency division multiple access (orthogonal frequency division multiple access, OFDMA); if the format indicated in the U-SIG field is 2, it indicates that the PPDU is multi-user (multi-user, MU) multiple-input multiple-output (multiple-input multiple-output, MIMO) transmission; or if the format indicated in the U-SIG field is 3, it indicates that the PPDU is long-range transmission. For uplink transmission, if the format indicated in the U-SIG field is 0, it indicates that the PPDU is single-user transmission; if the format indicated in the U-SIG field is 1, it indicates that the format of the PPDU is trigger-based transmission; or if the format indicated in the U-SIG field is 2, it indicates that the format of the PPDU is long-range transmission. It may be understood that the foregoing relationship between a value of the format indicated in the U-SIG field and the format of the PPDU is merely an example, and should not be construed as a limitation on embodiments of this application.

For still another example, after receiving the PPDU, the third-party device may parse the PPDU based on the version number and the format that are of the PPDU and that are indicated in the U-SIG field. For example, when the version number, parsed by using the U-SIG field, of the PPDU is greater than 0, it may be further detected whether the format of the PPDU is long-range transmission.

For yet another example, the third-party device may further parse the transmission opportunity, the basic service set color, and the like that are indicated in the U-SIG field. Examples are not enumerated herein.

It may be understood that for descriptions of parsing the L-STF, the L-LTF, and the L-SIG field by the receive end, refer to a related protocol and the like. This is not limited in embodiments of this application.

It should be noted that, for the third-party device, if the third-party device does not support extended range transmission, or determines that the third-party device is close to an access point, an extended range transmission mode may be disabled, in other words, the third-party device may identify the PPDU as a legacy PPDU without determining whether the PPDU is an extended range PPDU.

The PPDUs shown in embodiments of this application, for example, the PPDUs in FIG. 3a to FIG. 3c and FIG. 4a to FIG. 4c, can ensure backward compatibility, and can further implement more functions.

Although a WUR PPDU may be used for wake-up radio transmission, the WUR PPDU cannot implement long-range transmission. In addition, both a WUR synchronization field and a WUR data field are modulated through on-off keying (on-off keying, OOK), and some functions based on OFDM modulation, such as interleaving and dual-carrier modulation, cannot be implemented. Consequently, channel selective fading cannot be effectively resisted.

In view of this, in some other embodiments of this application, a PPDU is further provided. The PPDU may implement long-range transmission of the PPDU, thereby extending a coverage area of a Wi-Fi signal. For example, the coverage area of the Wi-Fi signal may be further extended based on a coverage area involved in the 802.11b protocol. Optionally, an anti-interference capability of the Wi-Fi signal may be further increased.

It should be noted that at least one of a first STF, a first LTF, a first SIG field, and a first data field shown below may be included in a second part of the PPDU, and a first part of the PPDU may be, for example, a non-wake-up radio part (for example, including an L-STF, an L-LTF, an L-SIG field, a BPSK mark 1 field, and a BPSK mark 2 field) in a WUR PPDU, the first part shown in FIG. 3a to FIG. 3c, or the first part shown in FIG. 4a to FIG. 4c. The first part of the PPDU is not limited in embodiments of this application. When the second part shown in embodiments of this application is combined with the first part shown in FIG. 3a to FIG. 3c, or is combined with the first part shown in FIG. 4a to FIG. 4c, the PPDU not only can implement long-range transmission, so that the coverage area of the Wi-Fi signal can be further expanded based on the 802.11b protocol, but also can effectively maintain backward compatibility, so that a PPDU of a current version can be compatible with a PPDU of an earlier version. In other words, when receiving the PPDU, a legacy device may correctly parse the PPDU, and has backward compatibility; and may further extend a coverage area of the PPDU.

Certainly, the PPDU shown in embodiments of this application may alternatively include only the second part, in other words, the PPDU may not include the first part shown in embodiments of this application. In other words, the first part and the second part shown in embodiments of this application are different parts for distinguishing between PPDUs, and do not indicate that each PPDU needs to include the two parts. For example, if a transmission opportunity has been established by both communication parties through some interactions before the PPDU is transmitted, and it is ensured that transmission is not interfered, a transmit end may not transmit the first part of the PPDU shown in embodiments of this application.

For ease of description, the following describes the method provided in embodiments of this application by using an example in which the PPDU includes the first part and the second part. For example, the first part of the PPDU may include an L-STF, an L-LTF, an L-SIG field, an ER BPSK mark 1 field, and an ER BPSK mark 2 field (for example, the first part shown in FIG. 3a to FIG. 3c). For example, the first part of the PPDU may include an L-STF, an L-LTF, an L-SIG field, an RL-SIG field, and a U-SIG field (for example, the first part shown in FIG. 4a to FIG. 4c). The first part shown herein is merely an example, and should not be construed as a limitation on embodiments of this application.

The following describes in detail the second part of the PPDU in embodiments of this application. The second part of the PPDU may meet any one or more of the following first to fifth items.

First item: The PPDU includes the first STF, where the first STF is obtained based on a second STF and a first sequence, and a time length of the first STF is greater than a time length of the L-STF.

The first sequence shown in embodiments of this application is a sequence used to extend the second STF, and the first sequence is used to extend the second STF to obtain the first STF. That is, a function of the first sequence is extension. For example, that the first STF is obtained based on a second STF and a first sequence may also be understood as follows: The first STF is obtained based on an OFDM symbol occupied by the second STF or a part of an OFDM symbol; or a sequence carried in the first STF (which may also be referred to as a first STF sequence) is obtained by extending a sequence carried in the second STF (which may also be referred to as a second STF sequence).

The time length may also be understood as a sending time length or a transmission time length. For example, if a length of each OFDM symbol is 4 microseconds, the foregoing description may be equivalent to that a number of OFDM symbols occupied by the first STF is greater than a number of OFDM symbols occupied by the L-STF. Certainly, if time lengths of OFDM symbols occupied by different fields are different, it cannot be simply equivalent to that the number of OFDM symbols occupied by the first STF is greater than the number of OFDM symbols occupied by the L-STF. For example, a time length corresponding to one OFDM symbol may be 4 microseconds (referred to as a 1x symbol), or a time length corresponding to one OFDM symbol may be 8 microseconds (referred to as a 2x symbol), or a time length corresponding to one OFDM symbol may be 16 microseconds (referred to as a 4x symbol). Examples are not enumerated herein.

The second STF may include any one of the L-STF (for example, included in the first part of the PPDU), an extremely high throughput-STF (extremely high throughput-STF, EHT-STF), an HE-STF, a very high throughput-STF (very high throughput-STF, VHT-STF), and a high throughput-STF (high throughput-STF, HT-STF). The HE-STF shown above may include an HE-STF in an HE MU PPDU or an HE-STF in a high efficient trigger based (high efficient trigger based, HE-TB) PPDU. The EHT-STF shown above may include an EHT-STF in an EHT MU PPDU or an EHT-STF in an EHT TB PPDU.

It should be noted that the EHT-STF, the HE-STF, the VHT-STF, and the HT-STF may be understood as STFs in different protocols in the 802.11 standard, and STFs in different protocols may carry different sequences. Therefore, the second STF is not limited in embodiments of this application. The second STF may be a sequence carried in STFs in different protocols, may be an STF carried in a PPDU before Wi-Fi 8, or may be an STF that appears in a subsequent protocol. Examples are not enumerated herein.

Optionally, the first sequence may be obtained based on a Barker code. It may be understood that because a length of the Barker code is greater than 1, the Barker code shown in embodiments of this application may also be referred to as a Barker code sequence or a Buck sequence. For example, a Barker code whose length is 2 is {+1, -1} or {+1, +1}. In this case, the first sequence may be {+1, -1} or {+1, + 1 }, or the first sequence may be {-1, +1} or {-1, -1} (that is, the first sequence may be obtained by negating the Barker code), or the first sequence may be obtained by cyclically shifting the Barker code. Examples are not enumerated herein. For another example, a Barker code whose length is 3 is {+1, +1, -1}. In this case, the first sequence may be {+1, +1, -1}, or the first sequence may be {-1, -1, +1} (that is, the first sequence is obtained by negating the Barker code), or the first sequence may be obtained by cyclically shifting the Barker code, for example, the first sequence is {+1, -1, +1}, or the first sequence is {-1, +1, +1}. For still another example, a Barker code whose length is 4 is {+1, +1, -1, +1} or {+1, +1, +1, -1}. A relationship between the first sequence and the Barker code is not enumerated herein. For yet another example, a Barker code whose length is 5 is {+1, +1, +1, -1, +1}, a Barker code whose length is 7 is {+1, +1, +1, -1, -1, +1, -1}, a Barker code whose length is 11 is {+1, -1, +1, +1, -1, +1, +1, +1, -1, -1, -1}, and a Barker code whose length is 13 is {+1, +1, +1, +1, +1, -1, -1, +1, +1, -1, +1, -1, +1}. It may be understood that the length of the Barker code shown herein may be understood as a bit length, and Barker codes of other lengths are not enumerated herein. It should be noted that the first sequence shown above is equal to the Barker code, or the first sequence is obtained by cyclically shifting the Barker code, or the first sequence is obtained by negating the Barker code, which is merely an example. For example, the first sequence may alternatively be obtained by sorting the Barker code from back to front. For example, the Barker code whose length is 5 is {+1, +1, +1, -1, +1}. In this case, the first sequence may be {+1, -1, +1, +1, +1}.

Optionally, the first sequence may be obtained based on a maximum length sequence (maximum length sequence, MLS), or may be obtained based on a Zadoff-Chu (Zadoff-Chu, ZC) sequence, or may be obtained based on a Gray complementary sequence. Optionally, elements of the first sequence may include +1. For example, the first sequence may be an all-1 sequence (which may also be understood as follows: The first STF is obtained by simply copying the second STF). Because the function of the first sequence is to extend the sequence carried in the second STF, specific content of the first sequence is not limited in embodiments of this application.

The following describes the first STF by using an example in which the first STF is obtained based on the second STF and the first sequence, and the first sequence is obtained based on the Barker code.

The OFDM symbol or the part of the OFDM symbol in the second STF modulated through OFDM is extended by using the Barker code, to obtain the first STF, so that the time length of the first STF is greater than the time length of the L-STF. The foregoing extension manner may also be considered as weighted repetition of a signal in time domain. Therefore, a receive end may perform related processing based on the first STF, thereby improving an equivalent signal-to-noise ratio, and ensuring that the receive end detects the PPDU at a longer range. A good correlation characteristic (for example, an auto-correlation characteristic or a cross-correlation characteristic) of the Barker code can help the receive end accurately detect the PPDU (for example, a process of identifying the PPDU is to distinguish, through correlation, whether the PPDU or noise is received. Therefore, a correlation value of the PPDU is high, and a correlation value of the noise is low. This can effectively improve accuracy of detecting the PDPU). It may be understood that related descriptions shown herein are also applicable to another type of first sequence.

In a possible implementation, that the first STF is obtained by extending the OFDM symbol in the second STF by using the first sequence may also be understood as follows: The first STF is obtained by extending the OFDM symbol occupied by the second STF by using the first sequence. It may be understood that if the first sequence is obtained based on the Barker code, the first STF may also be understood as being obtained based on the Barker code and the OFDM symbol (or the part of the OFDM symbol) occupied by the second STF. The OFDM symbol (or the part of the OFDM symbol) is extended, so that advantages of OFDM modulation can be retained. For example, OFDM modulation can help resist frequency selective fading. In addition, an existing design can be retained. For example, manners such as OFDM modulation-based coding, OFDM modulation-based interleaving, and OFDM modulation-based frequency-domain repetition can still be retained.

In an example, an OFDM symbol with a periodicity of 0.8 microseconds may be used, for example, a time length of one OFDM symbol is 4 microseconds or a total time length of two OFDM symbols is 8 microseconds, and the second STF is extended on this basis. For example, the OFDM symbol occupied by the second STF may be extended at a granularity of one OFDM symbol, or the OFDM symbol occupied by the second STF may be extended at a granularity of two OFDM symbols. For example, in a 20 MHz bandwidth, a sequence of the HE-STF in the HE MU PPDU in frequency domain is

$$HES_{-112:16:112} = \{M\} \cdot (1 + j) / \sqrt{2}$$, where an M sequence is M = {-1, -1, -1,1,1,1, -1,1,1,1, -1, 1, 1, -1, 1}, and a value on another subcarrier is 0.

In another example, an OFDM symbol with a periodicity of 1.6 microseconds may be used, for example, a time length of one OFDM symbol is 8 microseconds (referred to as a 2x symbol), and the second STF is extended on this basis. When the OFDM symbol with the periodicity of 1.6 microseconds is used for extension, a periodicity of the first STF may be different from a periodicity of the second STF (for example, the L-STF). Therefore, the first STF is not mistakenly considered as the L-STF by the legacy device. Therefore, disorder of PPDU detection is avoided. It may be understood that an OFDM symbol with a periodicity of 3.2 microseconds may be further used. Examples are not enumerated in embodiments of this application. For example, in a 20 MHz bandwidth, a sequence of the HE-STF in the HE TB PPDU in frequency domain is: $$HES_{-120:8:120} = \{M, 0, -M\} \cdot (1 + j) / \sqrt{2}$$, where an M sequence is $M$ = {-1, -1, -1,1,1,1, -1,1,1,1, -1, 1, 1, -1, 1}, and a value on another subcarrier is 0.

The Barker code whose length is 11 is used as an example. In this case, the first STF may include {+HE-STF symbol, -HE-STF symbol, +HE-STF symbol, +HE-STF symbol, -HE-STF symbol, +HE-STF symbol, +HE-STF symbol, +HE-STF symbol, -HE-STF symbol, -HE-STF symbol, -HE-STF symbol}. The -HE-STF symbol indicates that a value of each subcarrier of the HE-STF symbol is negated. It may be understood that the HE-STF symbol shown herein may be understood as one OFDM symbol occupied by the HE-STF. Certainly, the HE-STF may alternatively occupy two OFDM symbols or the like. This is not limited in embodiments of this application.

The Barker code whose length is 11 is still used as an example. In this case, the first STF may include {+L-STF symbol 1, +L-STF symbol 2, -L-STF symbol 1, -L-STF symbol 2, +L-STF symbol 1, +L-STF symbol 2, +L-STF symbol 1, +L-STF symbol 2, -L-STF symbol 1, -L-STF symbol 2, +L-STF symbol 1, +L-STF symbol 2, +L-STF symbol 1, +L-STF symbol 2, +L-STF symbol 1, +L-STF symbol 2, -L-STF symbol 1, -L-STF symbol 2, - L-STF symbol 1, -L-STF symbol 2, -L-STF symbol 1, -L-STF symbol 2}. Alternatively, the first STF may include {+L-STF symbol 1, -L-STF symbol 1, +L-STF symbol 1, +L-STF symbol 1, -L-STF symbol 1, +L-STF symbol 1, +L-STF symbol 1, +L-STF symbol 1, -L-STF symbol 1, -L-STF symbol 1, +L-STF symbol 2, - L-STF symbol 2, +L-STF symbol 2, +L-STF symbol 2, -L-STF symbol 2, +L-STF symbol 2, +L-STF symbol 2, +L-STF symbol 2, -L-STF symbol 2, -L-STF symbol 2, -L-STF symbol 2}. Alternatively, the first STF may include {+L-STF symbol 1, -L-STF symbol 2, +L-STF symbol 1, +L-STF symbol 2, -L-STF symbol 1, +L-STF symbol 2, +L-STF symbol 1, +L-STF symbol 2, -L-STF symbol 1, -L-STF symbol 2, -L-STF symbol 1, +L-STF symbol 2, - L-STF symbol 1, +L-STF symbol 2, +L-STF symbol 1, -L-STF symbol 2, +L-STF symbol 1, +L-STF symbol 2, +L-STF symbol 1, -L-STF symbol 2, -L-STF symbol 1, -L-STF symbol 2}. It may be understood that the L-STF symbol 1 shown herein may be understood as a first OFDM symbol in two OFDM symbols occupied by the L-STF, and the L-STF symbol 2 may be understood as a second OFDM symbol in the two OFDM symbols occupied by the L-STF.

It should be noted that, when a multiple greater than 13 needs to be extended, a plurality of groups of Barker codes may be extended, for example, three groups of 13-bit Barker codes are extended, that is, it is equivalent to extending 39 times. Each group may be further multiplied by +1 or -1. For example, when the three groups of 13-bit Barker codes are extended, a first group may use a 13-bit Barker code, a second group may use a 13-bit Barker code, and a third group may use a sequence obtained by negating an entire 13-bit Barker code. For another example, when the three groups of 13-bit Barker codes are extended, a first group may use a 13-bit Barker code, a second group may use a sequence obtained by negating an entire 13-bit Barker code, and a third group may use a 13-bit Barker code. Alternatively, three symbols may be packed and then a 13-bit Barker code is extended. Each group of packed symbols may also be further multiplied by +1 or -1. Examples are not enumerated herein. Alternatively, the 2x or 4x symbol may be directly extended. In comparison with the 1x symbol, it is equivalent to that the 2x or 4x symbol is additionally extended by two times or four times. It may be understood that the description of extending the multiple greater than 13 shown herein is also applicable to the following solution of extending the part of the OFDM symbol. Details are not described below.

In another possible implementation, that the first STF is obtained by extending the part of the OFDM symbol in the second STF by using the first sequence may also be understood as follows: The first STF is obtained by extending the part of the OFDM symbol occupied by the second STF by using the first sequence. For example, one OFDM symbol may include N periodicity parts, and N is a positive integer. In this case, the first STF may be obtained by extending M periodicity parts in the second STF by using the first sequence, where M is an integer greater than 1 and less than N. For example, if an OFDM symbol with a periodicity of 0.8 microseconds is used, and a time length of one symbol is 4 microseconds, that is, N=5, the transmit end may perform extension based on a part with a periodicity of 0.8 microseconds, for example, perform extension in a periodicity of 0.8 microseconds (that is, M=1) in one OFDM symbol. For example, if an OFDM symbol with a periodicity of 1.6 microseconds is used, and a time length of one symbol is 8 microseconds, the transmit end may perform extension based on a part with a periodicity of 1.6 microseconds, for example, perform extension in a periodicity of 1.6 microseconds in one OFDM symbol. It may be understood that when M is equal to N, it indicates that the first STF is obtained by extending the OFDM symbol occupied by the second STF by using the first sequence.

For example, the Barker code whose length is 11 is used as an example. In this case, the first STF may include {first part in a +HE-STF symbol, first part in a -HE-STF symbol, first part in the +HE-STF symbol, first part in the +HE-STF symbol, first part in the -HE-STF symbol, first part in the +HE-STF symbol, first part in the +HE-STF symbol, first part in the +HE-STF symbol, first part in the -HE-STF symbol, first part in the -HE-STF symbol, first part in the -HE-STF symbol; second part in the +HE-STF symbol, second part in the -HE-STF symbol, second part in the +HE-STF symbol, second part in the +HE-STF symbol, second part in the -HE-STF symbol, second part in the +HE-STF symbol, second part in the +HE-STF symbol, second part in the +HE-STF symbol, second part in the -HE-STF symbol, second part in the -HE-STF symbol, second part in the -HE-STF symbol; third part in the +HE-STF symbol, third part in the -HE-STF symbol, third part in the +HE-STF symbol, third part in the +HE-STF symbol, third part in the -HE-STF symbol, third part in the +HE-STF symbol, third part in the +HE-STF symbol, third part in the +HE-STF symbol, third part in the -HE-STF symbol, third part in the -HE-STF symbol, third part in the -HE-STF symbol, fourth part in the +HE-STF symbol; fourth part in the -HE-STF symbol, fourth part in the +HE-STF symbol, fourth part in the +HE-STF symbol, fourth part in the -HE-STF symbol, fourth part in the +HE-STF symbol, fourth part in the +HE-STF symbol, fourth part in the +HE-STF symbol, fourth part in the -HE-STF symbol, fourth part in the -HE-STF symbol, fourth part in the -HE-STF symbol; fifth part in the +HE-STF symbol, fifth part in the -HE-STF symbol, fifth part in the +HE-STF symbol, fifth part in the +HE-STF symbol, fifth part of the -HE-STF symbol, fifth part in the +HE-STF symbol, fifth part in the +HE-STF symbol, fifth part in the +HE-STF symbol, fifth part in the -HE-STF symbol, fifth part in the -HE-STF symbol, fifth part in the -HE-STF symbol}. The first part (or the second part, the third part, the fourth part, or the fifth part) in the HE-STF symbol indicates that a value of each subcarrier in the first part (or the second part, the third part, the fourth part, or the fifth part) in the HE-STF symbol is negated.

An example in which the first STF shown above is obtained based on the second STF and the first sequence is shown. However, the first STF shown in embodiments of this application is not necessarily obtained based on the second STF and the first sequence. For example, both communication parties may store a sequence that needs to be carried in the first STF, and then directly add the stored sequence to the first STF during each communication. In other words, the sequence carried in the first STF may be obtained by extending the first STF, or may be pre-stored. To be specific, in actual application, the transmit end may obtain the first STF based on the second STF and the first sequence; or the transmit end may not perform the step of obtaining the first STF based on the second STF and the first sequence, but add the foregoing final result (for example, the sequence included in the first STF shown above) to the first STF. The description of the first STF herein is also applicable to the first LTF shown below.

Based on the first STF shown in embodiments of this application, the receive end may perform the following processing:

performing cross-correlation or auto-correlation on the first STF.

In embodiments of this application, the receive end may perform cross-correlation or auto-correlation on the first STF in more STF periodicities, to increase the equivalent signal-to-noise ratio (signal-to-noise ratio, SNR) (because signal energy is constant and the noise is random, after superposition is performed on the first STF, the signal energy may be accumulated, but the noise is not accumulated. Therefore, the equivalent SNR increases). For example, before extension, the receive end may perform cross-correlation in four 0.8 microseconds (for example, one OFDM symbol). After extension, if the second STF is extended based on the Barker code whose length is 11, the receive end may perform a cross-correlation operation in 44 0.8 microseconds. It may be understood that the receive end may further use more STF periodicities to perform automatic gain control and coarse time synchronization and coarse frequency synchronization.

The first STF shown in embodiments of this application may be understood as an enhanced STF or an extended STF, and can effectively resolve the following problem: For example, after the L-STF is transmitted for a long enough range, the receive end may not correctly identify the L-STF, and consequently, the L-STF is mistakenly considered as noise when energy of the L-STF is less than sensitivity of the receive end. Therefore, the receive end can effectively identify the first STF, and efficiency of detecting the PPDU by the receive end is improved. It may be understood that the receive end shown in embodiments of this application may be understood as the target receive end shown above. For parsing of the first part by the target receive end, refer to the foregoing descriptions of parsing the PPDU by the third-party device. Details are not described herein again. In addition, for descriptions of the third-party device, refer to the foregoing descriptions. Details are not described herein again.

Second item: The PPDU includes the first LTF, where the first LTF is obtained based on a second LTF and a second sequence, and a time length of the first LTF is greater than a time length of the L-LTF.

The second sequence shown in embodiments of this application is a sequence used to extend the second LTF, and the second sequence is used to extend the second LTF to obtain the first LTF. That is, a function of the second sequence is extension. For example, that the first LTF is obtained based on a second LTF and a second sequence may also be understood as follows: The first LTF is obtained based on an OFDM symbol occupied by the second LTF or a part of an OFDM symbol; or a sequence carried in the first LTF (which may also be referred to as a first LTF sequence) is obtained by extending a sequence carried in the second LTF (which may also be referred to as a second LTF sequence).

For a relationship between a time length and an OFDM symbol, refer to related descriptions in the first item. Details are not described herein again.

The second LTF may include any one of the L-LTF (for example, included in the first part of the PPDU), an EHT-LTF, an HE-LTF, a VHT-LTF, and an HT-LTF. For example, the sequence carried in the first LTF may be obtained based on the second sequence and a sequence carried in the L-LTF (referred to as an L-LTF sequence for short), or the sequence carried in the first LTF is obtained based on the second sequence and a sequence carried in an EHT-LTF field (referred to as an EHT-LTF sequence for short). Details are not described herein again. It may be understood that the second LTF and the second STF shown in embodiments of this application may be included in different protocols. For example, the second STF includes the HE-STF, and the second LTF includes the EHT-LTF; or the second STF may include the L-STF, and the second LTF may include the EHT-LTF. Certainly, the second LTF and the second STF may alternatively be included in a same protocol. This is not limited in embodiments of this application.

It should be noted that the EHT-LTF, the HE-LTF, the VHT-LTF, and the HT-LTF may be understood as LTFs in different protocols in the 802.11 standard, and LTFs in different protocols may carry different sequences. Therefore, the second LTF is not limited in embodiments of this application. The second LTF may be a sequence carried in LTFs in different protocols, may be an LTF carried in the PPDU before Wi-Fi 8, or may be an LTF that appears in the subsequent protocol. Examples are not enumerated herein.

Optionally, the second sequence may be obtained based on a Barker code. For example, a Barker code whose length is 2 is {+1, -1} or {+1, +1}. In this case, the second sequence may be {+1, -1} or {+1, + 1 }, or the second sequence may be {-1, + I} or {-1, -1} (that is, the second sequence may be obtained by negating the Barker code), or the second sequence may be obtained by cyclically shifting the Barker code. Examples are not enumerated herein. For another example, a Barker code whose length is 3 is {+1, +1, -1}. In this case, the second sequence may be {+1, +1, -1}, or the second sequence may be {-1, -1, +1} (that is, the second sequence is obtained by negating the Barker code), or the second sequence may be obtained by cyclically shifting the Barker code, for example, the second sequence is {+1, -1, +1}, or the second sequence is {-1, +1, +1}. For still another example, a Barker code whose length is 4 is {+1, +1, -1, + 1} or {+1, +1, +1, -1}. A relationship between the second sequence and the Barker code is not enumerated herein. It should be noted that the second sequence shown above is equal to the Barker code, or the second sequence is obtained by cyclically shifting the Barker code, or the second sequence is obtained by negating the Barker code, which is merely an example. For example, the second sequence may alternatively be obtained by sorting the Barker code from back to front.

Optionally, the second sequence may be obtained based on an MLS, or may be obtained based on a ZC sequence, or may be obtained based on a Gray complementary sequence. Optionally, elements of the second sequence may include +1. For example, the second sequence may be an all-1 sequence, which may also be understood as follows: The first LTF is obtained by simply copying the second LTF.

It should be noted that the first sequence and the second sequence may be the same, or the first sequence and the second sequence may be different. When the first sequence and the second sequence are the same, because extension lengths are the same, implementation is simple. When the first sequence and the second sequence are different, the transmit end may dynamically select a length based on performance of a receiver, to balance overheads caused by the performance of the receiver and extension repetition. For example, if performance of the first STF is good, the first STF may be extended several times less than the first LTF. A difference between the first sequence and the second sequence may include at least one of the following: For example, the first sequence and the second sequence have different lengths. For another example, the first sequence is obtained by negating the Barker code sequence, and the second sequence is a Barker code sequence. For still another example, the first sequence is a Barker code sequence, and the second sequence is obtained by negating the Barker code sequence. For yet another example, the first sequence is obtained by negating the Barker code sequence, and the second sequence is obtained by cyclically shifting the Barker code sequence. In other words, the difference between the first sequence and the second sequence may lie in that the first sequence and the second sequence may be obtained based on different processing manners of the Barker code, or the first sequence and the second sequence have different lengths. The difference shown above includes: The first sequence and the second sequence have a same length, and the first sequence and the second sequence may be obtained based on different processing manners of the Barker code; or the first sequence and the second sequence have different lengths, and the first sequence and the second sequence are obtained based on different processing manners of the Barker code. It may be understood that descriptions of a relationship between the first sequence and the second sequence are also applicable to the following descriptions of the first sequence and a fourth sequence, the first sequence and a fifth sequence, the second sequence and the fourth sequence, and the second sequence and the fifth sequence. Details are not described below.

The following describes the first LTF by using an example in which the first LTF is obtained based on the second LTF and the second sequence, and the second sequence is obtained based on the Barker code.

The OFDM symbol or the part of the OFDM symbol occupied by the second LTF modulated through OFDM is extended by using the Barker code, to obtain the first LTF, so that the time length of the first LTF is greater than the time length of the L-LTF. The foregoing extension manner may also be considered as weighted repetition of a signal in time domain. Therefore, the receive end may perform maximum likelihood combining based on the first LTF, thereby improving the equivalent signal-to-noise ratio, and ensuring that the receive end detects the PPDU at the longer range. It may be understood that related descriptions shown herein are also applicable to another type of second sequence.

In a possible implementation, that the first LTF is obtained by extending the OFDM symbol in the second LTF by using the second sequence may also be understood as follows: The first LTF is obtained by extending the OFDM symbol occupied by the second LTF by using the second sequence. It may be understood that if the second sequence is obtained based on the Barker code, the first LTF may also be understood as being obtained based on the Barker code and the OFDM symbol occupied by the second LTF. For example, in addition to a guard interval, an OFDM symbol occupied by the HE-LTF and an OFDM symbol occupied by the EHT-LTF each may be divided into three lengths: 1x, 2x, and 4x, which respectively correspond to 3.2 microseconds, 6.4 microseconds, and 12.8 microseconds. The guard interval may be 0.8 microseconds, 1.6 microseconds, or 3.2 microseconds. In other words, one OFDM symbol in the HE-LTF or the EHT-LTF may include the following combination: any one of {3.2 microseconds, 6.4 microseconds, 12.8 microseconds}, and any one of {0.8 microseconds, 1.6 microseconds, 3.2 microseconds}. For example, other than guard intervals, time lengths of OFDM symbols occupied by the L-LTF, the HT-LTF, and the VHT-LTF may be 3.2 microseconds; and a guard interval of the L-LTF is one 1.6 microseconds shared by two 3.2 microseconds, a guard interval of the HT-LTF is 0.8 microseconds, and a guard interval of the VHT-LTF is 0.4 microseconds or 0.8 microseconds. It may be understood that, the foregoing length of the guard interval is merely an example. For example, the guard interval may be further increased. Examples are not enumerated herein.

For example, in a 20 MHz bandwidth, a sequence carried in a 1x HE-LTF is $HELTF_{-122,122}$={0, 0, -1, 0, 0, 0, +1, 0, 0, 0, +1, 0, 0, 0, -1, 0, 0, 0, +1, 0, 0, 0, -1, 0, 0, 0, +1, 0, 0, 0, +1, 0, 0, 0, +1, 0, 0, 0, +1, 0, 0, 0, -1, 0, 0, 0, -1, 0, 0, 0, +1, 0, 0, 0, +1, 0, 0, 0, +1, 0, 0, 0, -1, 0, 0, 0, -1, 0, 0, 0, -1, 0, 0, 0, +1, 0, 0, 0, -1, 0, 0, 0, -1, 0, 0, 0, +1, 0, 0, 0, +1, 0, 0,0, -1, 0, 0, 0, -1, 0, 0, 0, +1, 0, 0, 0, -1, 0, 0, 0, -1, 0, 0, 0, +1, 0, 0, 0, -1, 0, 0, 0, 0, 0, 0, 0, -1, 0, 0, 0, +1, 0, 0, 0, +1, 0, 0, 0, +1, 0, 0, 0, +1, 0, 0, 0, +1, 0, 0, 0, -1, 0, 0, 0, -1, 0, 0, 0, -1, 0, 0, 0, -1, 0, 0, 0, -1, 0, 0, 0, +1, 0, 0, 0, -1, 0, 0, 0, -1, 0, 0, 0, -1, 0, 0, 0, +1, 0, 0, 0, -1, 0, 0, 0, -1, 0, 0, 0, +1, 0, 0, 0, -1, 0, 0, 0, -1, 0, 0, 0, +1, 0, 0, 0, -1, 0, 0, 0, +1, 0, 0, 0, -1, 0, 0, 0, -1, 0, 0, 0, -1, 0, 0, 0, -1, 0, 0}.

In a 20 MHz bandwidth, a sequence of a 2x HE-LTF is: $HELTF_{-122,122}$={-1, 0, -1, 0, -1, 0, +1, 0, +1, 0, -1, 0, +1, 0, -1, 0, -1, 0, -1, 0, -1, 0, +1, 0, -1, 0, +1, 0, -1, 0, -1, 0, +1, 0, +1, 0, -1, 0, +1, 0, +1, 0, +1, 0, +1, 0, -1, 0, +1, 0, -1, 0, +1, 0, -1, 0, -1, 0, +1, 0, +1, 0, -1, 0, +1, 0, -1, 0, -1, 0, -1, 0, -1, 0, +1, 0, -1, 0, +1, 0, +1, 0, -1, 0, -1, 0, +1, 0, -1, 0, -1, 0, -1, 0, -1, 0, -1, 0, +1, 0, -1, 0, -1, 0, -1, 0, +1, 0, +1, 0, +1, 0, -1, 0, -1, 0, +1, 0, 0, 0, +1, 0, -1, 0, +1, 0, +1, 0, -1, 0, +1, 0, +1, 0, -1, 0, +1, 0, +1, 0, -1, 0, -1, 0, +1, 0, -1, 0, +1, 0, +1, 0, +1, 0, +1, 0, -1, 0, +1, 0, -1, 0, +1, 0, +1, 0, -1, 0, -1, 0, +1, 0, -1, 0, -1, 0, -1, 0, -1, 0, -1, 0, +1, 0, -1, 0, +1, 0, +1, 0, -1, 0, -1, 0, +1, 0, +1, 0, -1, 0, +1, 0, -1, 0, -1, 0, -1, 0, -1, 0, +1, 0, -1, 0, +1, 0, +1, 0, +1, 0, -1, 0, -1, 0, +1, 0, -1, 0, -1, 0, -1, 0, -1, 0, +1, 0, -1, 0, +1}.

In a 20 MHz bandwidth, a sequence of a 4x HE-LTF is: $HELTF_{-122,122}$={-1, -1, +1, -1, +1, -1, +1, +1, +1, -1, +1, +1, +1, -1, -1, +1, -1, -1, -1, -1, -1, +1, +1, -1, -1, -1, -1, +1, +1, -1, +1, -1, +1, +1, +1, +1, -1, +1, -1, -1, +1, +1, -1, +1, +1, +1, +1, -1,

-1, +1, -1, -1, -1, +1, +1, +1, +1, -1, +1, +1, -1, -1, -1, -1, +1, -1, -1, +1, +1, -1, +1, -1, -1, -1, -1, +1, -1, +1, -1, -1, -1, -1, -1, +1, +1, -1, -1, -1, -1, -1, +1, -1, -1, +1, +1, +1, -1, +1, +1, +1, -1, +1, +1, -1, -1, -1, -1, +1, +1, +1, -1, -1, -1, +1, -1, +1, +1, +1, 0, 0, 0, -1, +1, -1, +1, -1, +1, +1, -1, +1, +1, +1, -1, -1, +1, -1, -1, +1, -1, +1, -1, +1, +1, +1, -1, +1, +1, +1, -1, -1, +1, -1, -1, -1, -1, -1, +1, +1, -1, -1, -1, -1, -1, -1, +1, -1, +1, -1, -1, -1, -1, +1, -1, +1, +1, -1, -1, +1, -1, -1, -1, -1, +1, +1, -1, +1, +1, +1, +1, +1, +1, +1, -1, +1, +1, -1, -1, -1, -1, +1, -1, -1, +1, +1, -1, +1, -1, -1, -1, -1, +1, -1, +1, -1, -1, +1, +1, +1, +1, -1, - 1, +1, +1, +1, +1, +1, -1, +1, +1, -1, -1, -1, +1, -1, -1, -1, +1, -1, +1, -1, +1, +1}.

For example, the Barker code whose length is 11 is used as an example. In this case, the first LTF may include {+HE-LTF symbol, -HE-LTF symbol, +HE-LTF symbol, +HE-LTF symbol, -HE-LTF symbol, +HE-LTF symbol, +HE-LTF symbol, +HE-LTF symbol, -HE-LTF symbol, -HE-LTF symbol, -HE-LTF symbol}. The -HE-LTF symbol indicates that a value of each subcarrier of the HE-LTF symbol is negated.

In another possible implementation, that the first LTF is obtained by extending the part of the OFDM symbol in the second LTF by using the second sequence may also be understood as follows: The first LTF is obtained by extending the part of the OFDM symbol occupied by the second LTF by using the second sequence. For example, for an OFDM symbol of 16 microseconds (a guard interval of 3.2 microseconds, and a part of 12.8 microseconds other than the guard interval), the second LTF may be extended based on 3.2 microseconds. Specific manners of extending the part of the OFDM symbol occupied by the second LTF to obtain the first LTF are not enumerated herein.

Based on the first LTF shown in embodiments of this application, the receive end may perform the following processing:

performing maximum likelihood combining on the first LTF. For the first LTF, maximum likelihood combining may be performed on symbols occupied by the extended LTF, to increase an equivalent SNR for channel estimation. It may be understood that the receive end may further use more LTF periodicities to perform channel estimation, fine time synchronization and fine frequency synchronization, and the like.

The first LTF shown in embodiments of this application may be understood as an enhanced LTF or an extended LTF, and can effectively resolve the following problem: For example, after the L-LTF is transmitted for a long enough range, the receive end may not correctly identify the L-LTF, and consequently, the L-LTF is mistakenly considered as noise when energy of the L-LTF is less than sensitivity of the receive end. Therefore, the receive end can effectively identify the first LTF, and efficiency of detecting the PPDU by the receive end is improved. It may be understood that the receive end shown in embodiments of this application may be understood as the target receive end shown above. For parsing of the first part by the target receive end, refer to the foregoing descriptions of parsing the PPDU by the third-party device. Details are not described herein again. For descriptions of the third-party device, refer to the foregoing descriptions. Details are not described herein again.

Third item: The PPDU includes the first SIG field, where a time length of the first SIG field is greater than a time length of the L-SIG field, and the first SIG field is obtained based on the fourth sequence and an OFDM symbol generated based on at least one piece of the following information: a service set color, an association identifier, a cyclic redundancy check, a tail bit, and a modulation and coding scheme.

Optionally, the fourth sequence may be obtained based on a Barker code. For example, a Barker code whose length is 2 is {+1, -1} or {+1, +1}. In this case, the fourth sequence may be {+1, -1} or {+1, + 1}, or the fourth sequence may be {-1, + I} or {-1, -1} (that is, the fourth sequence may be obtained by negating the Barker code), or the fourth sequence may be obtained by cyclically shifting the Barker code. Examples are not enumerated herein. For another example, a Barker code whose length is 3 is {+1, +1, -1}. In this case, the fourth sequence may be {+1, +1, - 1}, or the fourth sequence may be {-1, -1, +1} (that is, the fourth sequence is obtained by negating the Barker code), or the fourth sequence may be obtained by cyclically shifting the Barker code, for example, the fourth sequence is 1+1, -1, +1}, or the fourth sequence is {-1, +1, +1}. For still another example, a Barker code whose length is 4 is {+1, +1, -1, +1} or {+1, +1, +1, -1}. A relationship between the fourth sequence and the Barker code is not enumerated herein. It may be understood that the fourth sequence may alternatively be obtained by sorting the Barker code from back to front. Examples are not enumerated herein.

Optionally, the fourth sequence may be obtained based on an MLS, or may be obtained based on a ZC sequence, or may be obtained based on a Gray complementary sequence. Optionally, elements of the fourth sequence may include +1. For example, the fourth sequence may be an all-1 sequence, which may also be understood as follows: The first SIG field is obtained by simply copying the L-SIG field. For the relationship between the fourth sequence and the first sequence or the relationship between the fourth sequence and the second sequence, refer to the foregoing descriptions of the relationship between the first sequence and the second sequence. Details are not described herein again.

For example, the first SIG field may use a 1x symbol, 52 data subcarriers, BPSK, and 1/2 coding rate modulation, and may carry 26 information bits. For example, the first SIG field may carry at least one piece of the following information: a basic service set color of 5 bits, used to identify a basic service set in which the first SIG field is located; an association identifier of 11 bits, used to identify a station; a cyclic redundancy check of 4 bits, used to check information; and a tail bit of 6 bits, used to terminate a trellis of a convolutional decoder. For example, the first SIG field may use a 2x or 4x symbol to carry more information bits. For example, the first SIG field may carry at least one piece of the following information: a basic service set color of 6 or more bits, used to identify a basic service set in which the first SIG field is located; an association identifier of 11 bits, used to identify a station; a modulation and coding scheme that indicates a corresponding modulation and coding scheme, and may support a higher coding rate (or indicate whether dual-carrier modulation is used, whether duplicate transmission is performed in frequency domain, or the like); a cyclic redundancy check of 8 bits, used to check information; and a tail bit of 6 bits, used to terminate a trellis of a convolutional decoder. It may be understood that the first U-SIG field shown above may further carry at least one piece of the following information: a length (for example, a number of bytes) of a physical layer service data unit (physical layer service data unit, PSDU) or a number of OFDM symbols in a data field. Examples are not enumerated herein.

For example, after generating one or more OFDM symbols based on the foregoing information, the transmit end may extend the OFDM symbols (for example, extend the OFDM symbols based on the Barker code) to obtain the first SIG field, so that the time length of the first SIG field is greater than the time length of the L-SIG field. For example, an OFDM symbol is generated based on the foregoing information. The Barker code whose length is 11 is used as an example. In this case, the first SIG field may include {+SIG symbol, -SIG symbol, +SIG symbol, +SIG symbol, -SIG symbol, +SIG symbol, +SIG symbol, +SIG symbol, -SIG symbol, -SIG symbol, -SIG symbol}. The -SIG symbol indicates that a value of each subcarrier of the SIG symbol is negated. The SIG symbol shown herein may be understood as an OFDM symbol generated based on the foregoing information. For a specific extension manner, refer to the descriptions of the first item and the second item. Details are not described herein again.

The first SIG field may further use dual-carrier modulation (dual-carrier modulation, DCM), or duplicate transmission may be further performed on the first SIG field in frequency domain, or the first SIG field may be further transmitted on discrete subcarriers, to further improve reliability of the first SIG field.

In embodiments of this application, for a length indication of the L-SIG field, a time length range indicated by a length field of the L-SIG field may include a range of an acknowledgment frame, to protect receiving of the acknowledgment frame. Alternatively, a length indication of the L-SIG field may indicate "until the end of the PPDU". A length indication manner of the L-SIG field is not limited in embodiments of this application.

Based on the first SIG field shown in embodiments of this application, the receive end may perform the following processing:

performing maximum likelihood combining on the first SIG field. For example, for the first SIG field, maximum likelihood combining may be performed on symbols occupied by the extended SIG field, so that a log-likelihood ratio (log-likelihood ratio, LLR) is more accurate, accuracy of demodulating the first SIG field is improved, and accuracy of demodulating the PPDU is improved. The receive end may further demodulate signaling information of subsequent data based on the first SIG field.

The first SIG field shown in embodiments of this application may be understood as an enhanced SIG field, an extended SIG field, or the like. The SIG field is extended, so that efficiency of detecting the PPDU by the receive end can be improved, and accuracy of demodulating the PPDU can be improved. It may be understood that the receive end shown in embodiments of this application may be understood as the target receive end shown above. For parsing of the first part by the target receive end, refer to the foregoing descriptions of parsing the PPDU by the third-party device. Details are not described herein again. For descriptions of the third-party device, refer to the foregoing descriptions. Details are not described herein again.

Fourth item: The PPDU includes the first data field, where the first data field is obtained based on the fifth sequence and an OFDM symbol generated based on an information bit. For descriptions of the fifth sequence, refer to the foregoing descriptions of the first sequence, the second sequence, and the fourth sequence. Details are not described herein again. For example, after generating the OFDM symbol based on the information bit, the transmit end may extend the generated one or more OFDM symbols, to obtain the first data field. For example, an OFDM symbol (for example, a Data symbol shown below) is generated based on the foregoing information. The Barker code whose length is 11 is used as an example. In this case, the first data field may include {+Data symbol, -Data symbol, +Data symbol, +Data symbol, -Data symbol, +Data symbol, +Data symbol, +Data symbol, -Data symbol, -Data symbol, -Data symbol}. The -SIG symbol indicates that a value of each subcarrier of the SIG symbol is negated. For another example, two OFDM symbols (for example, a Data symbol 1 and a Data symbol 2 shown below) are generated based on the foregoing information. The Barker code whose length is 11 is used as an example. In this case, the first data field may include {+Data symbol 1, -Data symbol 1, +Data symbol 1, +Data symbol 1, -Data symbol 1, +Data symbol 1, +Data symbol 1, +Data symbol 1, -Data symbol 1, -Data symbol 1, -Data symbol 1, +Data symbol 2, - Data symbol 2, +Data symbol 2, +Data symbol 2, -Data symbol 2, +Data symbol 2, +Data symbol 2, +Data symbol 2, -Data symbol 2, -Data symbol 2, -Data symbol 2}. For a specific extension manner, refer to the descriptions of the first item and the second item. Details are not described herein again.

A data field is extended by using a Barker code, so that reliability of the first data field can be improved. It may be understood that the Barker code shown herein is merely an example. For example, the first data field may be obtained based on an MLS and the OFDM symbol generated based on the information bit, or may be obtained based on a ZC sequence and the OFDM symbol generated based on the information bit, or may be obtained based on a Gray complementary sequence and the OFDM symbol generated based on the information bit, or may be obtained based on an all-1 sequence and the OFDM symbol generated based on the information bit.

In embodiments of this application, the first data field may also further use DCM, or duplicate transmission may also be further performed on the first data field in frequency domain, or the first data field may also be further transmitted on discrete subcarriers, to further improve reliability of the first data field.

Based on the first data field shown in embodiments of this application, the receive end may perform the following processing:

performing maximum likelihood combining on the first data field. For example, for the first SIG field, maximum likelihood combining may be performed on all symbols in the extended SIG field, so that an LLR is more accurate, and accuracy of demodulating the first data field by the receive end is improved. It may be understood that the receive end shown in embodiments of this application may be understood as the target receive end shown above. For parsing of the first part by the target receive end, refer to the foregoing descriptions of parsing the PPDU by the third-party device. Details are not described herein again. For descriptions of the third-party device, refer to the foregoing descriptions. Details are not described herein again.

Fifth item: The PPDU includes a packet extension field, where the packet extension field is used to help the receive end obtain more processing time. Generally, the packet extension field may not carry related information, and the receive end does not need to demodulate the packet extension field. Therefore, in this time, the receive end may continue to demodulate a part that is not completed previously. It may be understood that the receive end shown in embodiments of this application may be understood as the target receive end shown above. For parsing of the first part by the target receive end, refer to the foregoing descriptions of parsing the PPDU by the third-party device. Details are not described herein again. For descriptions of the third-party device, refer to the foregoing descriptions. Details are not described herein again.

Based on the PPDU shown in embodiments of this application, the STF, the LTF, the SIG field, and the like are extended based on a sequence such as a Barker code, to increase the coverage area of the PPDU. In addition, performing extension based on the OFDM symbol or the part of the OFDM symbol may retain various operations and advantages based on the OFDM symbol.

With reference to the first to fifth items shown above, FIG. 5 is a diagram of a structure of a PPDU according to an embodiment of this application. As shown in FIG. 5, the PPDU may include a second part. Optionally, the PPDU may further include a first part. The second part may include a first STF, a first LTF, a first SIG field, a first data field, and a packet extension field. A time length of the first STF may be 4*n1 microseconds, 8*n1 microseconds, or 16*n1 microseconds, where n1 may be an integer greater than 2. A time length of the first LTF may be 4*n2 microseconds, 8*n2 microseconds, or 16*n2 microseconds, where n2 may be an integer greater than 2. A time length of the first SIG field may be 4*n3 microseconds, 8*n3 microseconds, or 16*n3 microseconds, where n3 may be an integer greater than 1. A time length of the first data field may be 4*n4 microseconds, 8*n4 microseconds, or 16*n4 microseconds, where n4 may be an integer greater than 1. A time length of the packet extension field may be 4*n5, where n5 may be an integer greater than 1. It may be understood that, 4, 8, or 16 shown above may be determined based on a time length of one OFDM symbol.

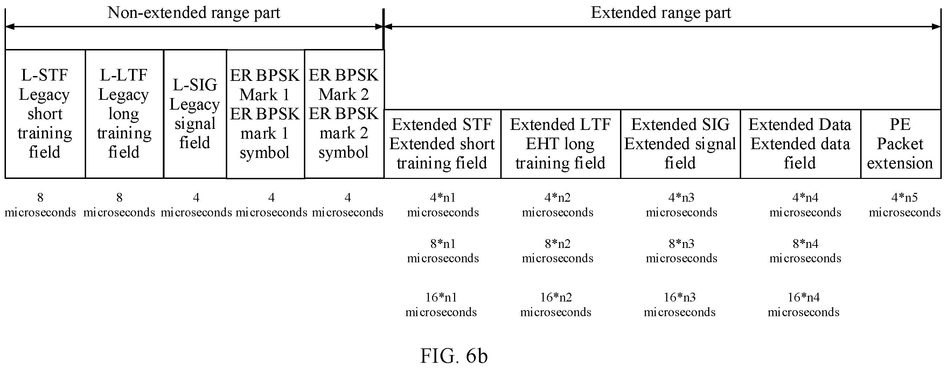

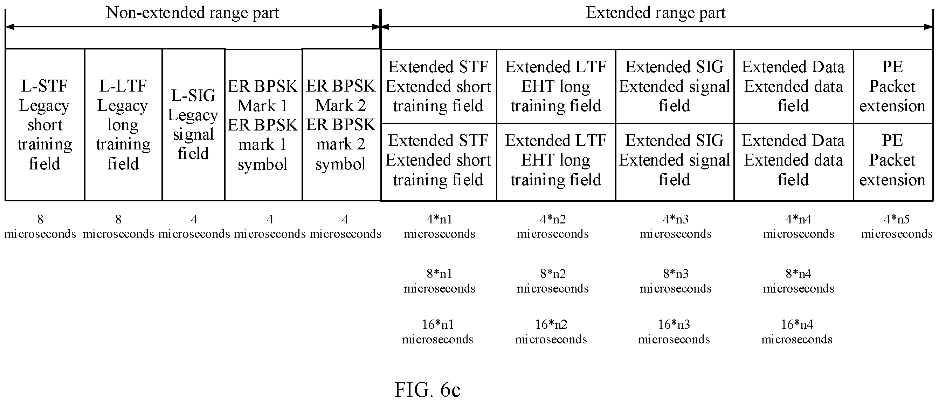

For example, the PPDU is an extended range PPDU, the first STF is an extended STF, the first LTF is an extended LTF, the first SIG field is an extended SIG field, and the first data field is an extended data field. FIG. 6a to FIG. 6c are respectively diagrams of structures of PPDUs according to embodiments of this application. As shown in FIG. 6a to FIG. 6c, the PPDU may include a non-extended range part and an extended range part. For descriptions of the non-extended range part, refer to the foregoing descriptions in FIG. 3a to FIG. 3c. For descriptions of the extended range part, refer to the foregoing descriptions of the first to fifth items. Optionally, as shown in FIG. 6a, a bandwidth of the non-extended range part may be the same as a bandwidth of the extended range part. Optionally, as shown in FIG. 6b, a bandwidth of the non-extended range part may be less than a bandwidth of the extended range part. Optionally, as shown in FIG. 6c, the extended range part may be repeatedly sent in frequency domain. Therefore, when power spectral density is not limited, a transmission distance of a second part can be effectively increased by reducing a transmission bandwidth of the second part of the PPDU and increasing the power spectral density, thereby increasing a coverage area of a Wi-Fi signal.

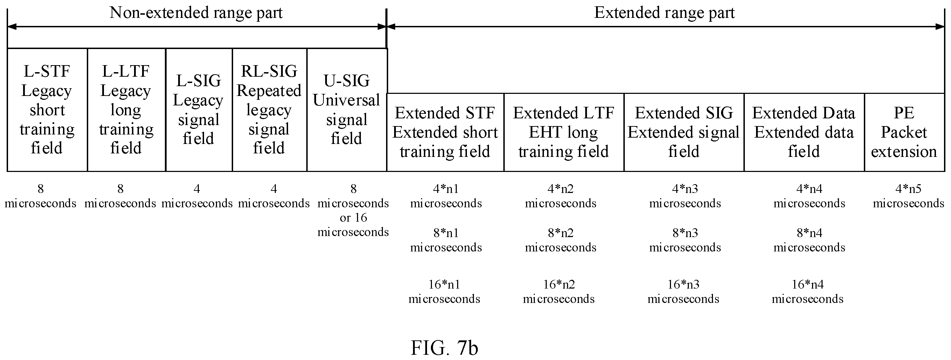

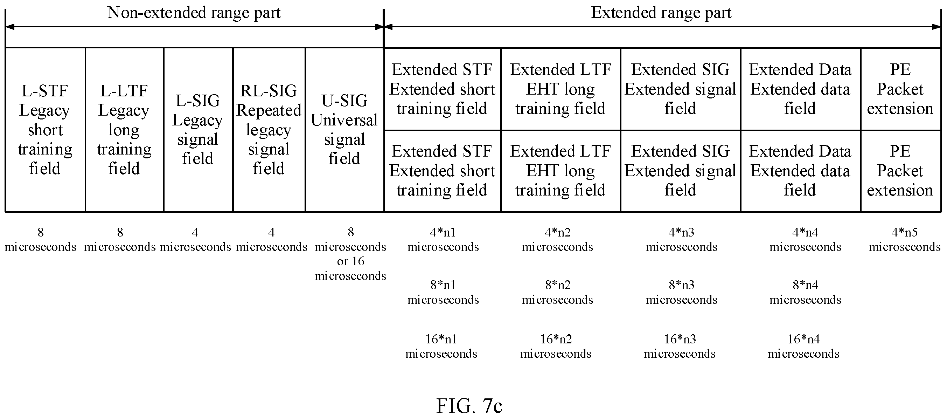

FIG. 7a to FIG. 7c are respectively diagrams of structures of PPDUs according to embodiments of this application. As shown in FIG. 7a to FIG. 7c, the PPDU may include a non-extended range part and an extended range part. For descriptions of the non-extended range part, refer to the foregoing descriptions in FIG. 4a to FIG. 4c. For descriptions of the extended range part, refer to the foregoing descriptions of the first to fifth items. Optionally, as shown in FIG. 7a, a bandwidth of the non-extended range part may be the same as a bandwidth of the extended range part. Optionally, as shown in FIG. 7b, a bandwidth of the non-extended range part may be less than a bandwidth of the extended range part. Optionally, as shown in FIG. 7c, the extended range part may be repeatedly sent in frequency domain.

Based on the PPDU shown in embodiments of this application, the coverage area of the Wi-Fi signal is further extended based on the coverage area of 802.11b, and the anti-interference capability of the Wi-Fi signal is increased (for example, when a part of the signal is interfered and the other part of the signal is not interfered, the receive end can still correctly receive the part that is not interfered). In addition, the PPDU shown in embodiments of this application is further backward compatible, and a preamble part (for example, the first part shown above) may be understood by the legacy device.

In the implementations shown above, for a part that is not described in detail in an implementation, refer to another implementation. The foregoing implementations may be separate embodiments, or a plurality of implementations may be combined into one embodiment.

The following describes communication apparatuses provided in embodiments of this application.

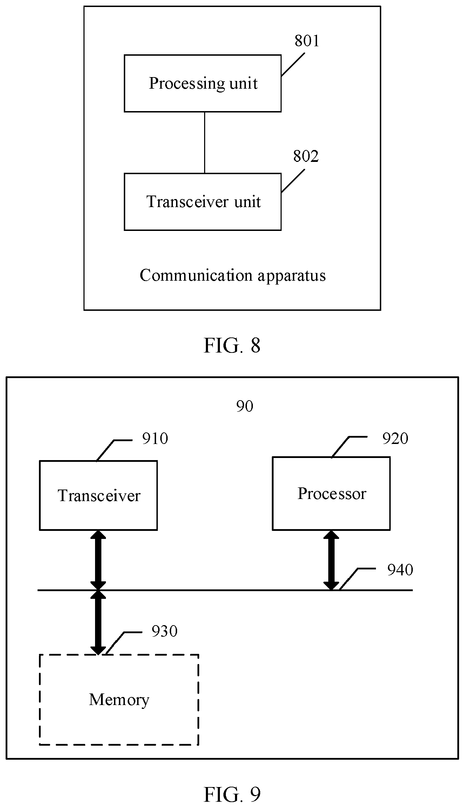

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, division into modules is an example, and is merely logical function division. In actual implementation, another division manner may be used. The following describes in detail the communication apparatuses in embodiments of this application with reference to FIG. 8 to FIG. 11.

FIG. 8 is a diagram of a structure of a communication apparatus according to an embodiment of this application. As shown in FIG. 8, the communication apparatus includes a processing unit 801 and a transceiver unit 802.

In some embodiments of this application, the communication apparatus may be the transmit end or the chip shown above, and the chip may be disposed in the transmit end. In other words, the communication apparatus may be configured to perform a step or a function performed by the transmit end in the method embodiments.

The processing unit 801 is configured to generate a PPDU, and the transceiver unit 802 is configured to output the PPDU.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein. For example, the processing unit 801 may be configured to perform step 201 shown in FIG. 2, and the transceiver unit 802 may be configured to perform the sending step in step 202 shown in FIG. 2.

FIG. 8 is reused. In some other embodiments of this application, the communication apparatus may be the receive end or the chip shown above, and the chip may be disposed in the receive end. In other words, the communication apparatus may be configured to perform a step or a function performed by the receive end in the method embodiments.

For example, the transceiver unit 802 is configured to input a PPDU, and the processing unit 801 is configured to process the PPDU.

For example, the processing unit 801 may be configured to perform at least one of the following: perform channel estimation based on the PPDU, or perform time synchronization based on the PPDU, or perform related processing based on the PPDU, or perform maximum likelihood combining based on the PPDU.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein. For example, the transceiver unit 802 may be further configured to perform the receiving step in step 202 shown in FIG. 2, and the processing unit 801 may be further configured to perform step 203 shown in FIG. 2.

In the foregoing embodiments, for descriptions of the PPDU, the first sequence, the second sequence, the third sequence, the fourth sequence, the fifth sequence, and the like, refer to the descriptions in the foregoing method embodiments. Details are not described herein again.

It may be understood that the foregoing division manner is merely an example. A division manner of the transmit end (or the chip disposed in the transmit end) and the receive end (or the chip disposed in the receive end) may be further shown as follows: The transmit end may include a generation unit and a sending unit, the receive end may include a receiving unit and a processing unit, and the processing unit may include at least one of a channel estimation subunit, a time synchronization subunit, a related processing subunit, a maximum likelihood combining subunit. Examples are not enumerated herein. Optionally, the transmit end and the receive end shown above each may further include a storage unit. The storage unit may be configured to store at least one of the first sequence, the second sequence, the third sequence, the fourth sequence, and the fifth sequence shown above. Alternatively, the storage unit may be configured to store at least one of the following: a sequence carried in a first STF (that is, a final result of the first STF obtained based on a second STF and the first sequence) and a sequence carried in a first LTF (that is, a final result of the first LTF obtained based on a second LTF and the second sequence).

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 8 or any form of product having a function of the second communication apparatus in FIG. 8 falls within the protection scope of embodiments of this application. It should be further understood that the following description is merely an example, and the product forms of the first communication apparatus and the second communication apparatus in embodiments of this application are not limited thereto.

In a possible implementation, in the communication apparatus shown in FIG. 8, the processing unit 801 may be one or more processors; and the transceiver unit 802 may be a transceiver, or the transceiver unit 802 may be a sending unit and a receiving unit. The sending unit may be a transmitter, the receiving unit may be a receiver, and the sending unit and the receiving unit are integrated into one device, for example, the transceiver. In embodiments of this application, the processor and the transceiver may be coupled, or the like. A manner of connecting the processor and the transceiver is not limited in embodiments of this application.

As shown in FIG. 9, a communication apparatus 90 includes one or more processors 920 and a transceiver 910.

For example, when the communication apparatus is configured to perform the step, method, or function performed by the transmit end, the processor 920 is configured to generate a PPDU, and the transceiver 910 is configured to send the PPDU.

For example, when the communication apparatus is configured to perform the step, method, or function performed by the receive end, the transceiver 910 is configured to receive a PPDU from a transmit end, and the processor 920 is configured to perform processing based on M sequences carried in the PPDU.

In embodiments of this application, for descriptions of the PPDU, the first sequence, the second sequence, the third sequence, the fourth sequence, the fifth sequence, and the like, refer to the descriptions in the foregoing method embodiments. Details are not described herein again.

It may be understood that, for specific descriptions of the processor and the transceiver, refer to the descriptions of the processing unit and the transceiver unit shown in FIG. 8. Details are not described herein again.

In each implementation of the communication apparatus shown in FIG. 9, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the communication apparatus 90 may further include one or more memories 930, configured to store program instructions, data, and/or the like. The memory 930 is coupled to the processor 920. The coupling in embodiments of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions stored in the memory 930. Optionally, at least one of the one or more memories may be included in the processor. For example, the memory may be configured to store at least one of the first sequence, the second sequence, the third sequence, the fourth sequence, and the fifth sequence shown above. For example, the memory may be configured to store at least one of the following: a sequence carried in a first STF (that is, a final result of the first STF obtained based on a second STF and the first sequence) and a sequence carried in a first LTF (that is, a final result of the first LTF obtained based on a second LTF and the second sequence).

In embodiments of this application, a specific connection medium among the transceiver 910, the processor 920 and the memory 930 is not limited. In embodiments of this application, in FIG. 9, the memory 930, the processor 920, and the transceiver 910 are connected to each other through a bus 940. The bus is represented by using a thick line in FIG. 9. A manner of connection between other components is only schematically described, but is not used as a limitation. The bus may be classified into an address bus, a data bus, a control bus, and the like. For ease of representation, only one thick line is used to represent the bus in FIG. 9, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combining with embodiments of this application may be directly implemented by a hardware processor, or may be implemented by using a combining of hardware and software modules in the processor, or the like.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 920 is mainly configured to: process a communication protocol and communication data, control the entire communication apparatus, execute a software program, and process data of the software program. The memory 930 is mainly configured to store the software program and the data. The transceiver 910 may include a control circuit and an antenna. The control circuit is mainly configured to: perform conversion between a baseband signal and a radio frequency signal and process the radio frequency signal. The antenna is mainly configured to receive/send a radio frequency signal in a form of an electromagnetic wave. An input/output apparatus like a touchscreen, a display, or a keyboard, is mainly configured to: receive data input by a user and output data to the user.

After the communication apparatus is powered on, the processor 920 may read the software program in the memory 930, interpret and execute instructions of the software program, and process the data of the software program. When data needs to be sent wirelessly, the processor 920 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 920. The processor 920 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in embodiments of this application may further have more components and the like than those in FIG. 9. This is not limited in embodiments of this application. The methods performed by the processor and the transceiver are merely examples. For specific steps performed by the processor and the transceiver, refer to the methods described above.

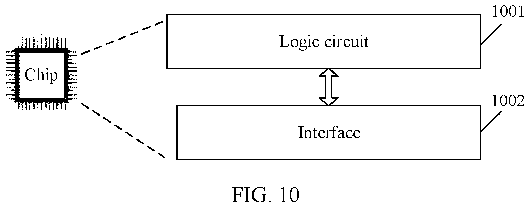

In another possible implementation, in the communication apparatus shown in FIG. 8, the processing unit 801 may be one or more logic circuits. The transceiver unit 802 may be an input/output interface that is also referred to as a communication interface, an interface circuit, an interface, or the like. Alternatively, the transceiver unit 802 may be a sending unit and a receiving unit. The sending unit may be an output interface, and the receiving unit may be an input interface. The sending unit and the receiving unit are integrated into one unit, for example, an input/output interface. As shown in FIG. 10, a communication apparatus shown in FIG. 10 includes a logic circuit 1001 and an interface 1002. That is, the processing unit 801 may be implemented via the logic circuit 1001, and the transceiver unit 802 may be implemented via the interface 1002. The logic circuit 1001 may be a chip, a processing circuit, an integrated circuit, a system on chip (system on chip, SoC), or the like. The interface 1002 may be a communication interface, an input/output interface, a pin, or the like. FIG. 10 shows an example in which the communication apparatus is a chip. The chip includes the logic circuit 1001 and the interface 1002.

In this embodiment of this application, the logic circuit and the interface may be coupled to each other. A specific manner of a connection between the logic circuit and the interface is not limited in embodiments of this application.

For example, when the communication apparatus is configured to perform the method, function, or step performed by the transmit end, the logic circuit 1001 is configured to generate a PPDU, and the interface 1002 is configured to output the PPDU.

For example, when the communication apparatus is configured to perform the method, function, or step performed by the receive end, the interface 1002 is configured to input a PPDU, and the logic circuit 1001 is configured to process the PPDU.

Optionally, the chip may further include a memory. The memory may be configured to store at least one of the first sequence, the second sequence, the third sequence, the fourth sequence, and the fifth sequence shown above. For example, the memory may be configured to store at least one of the following: a sequence carried in a first STF (that is, a final result of the first STF obtained based on a second STF and the first sequence) and a sequence carried in a first LTF (that is, a final result of the first LTF obtained based on a second LTF and the second sequence). Certainly, the memory may be further disposed outside the chip. For example, the chip may obtain the first sequence to the fifth sequence from a memory connected to the chip, or obtain a sequence carried in a first STF and/or a sequence carried in a first LTF.

It may be understood that the communication apparatus shown in embodiments of this application may implement the method provided in embodiments of this application in a form of hardware, or may implement the method provided in embodiments of this application in a form of software. This is not limited in embodiments of this application.

In embodiments of this application, for descriptions of the PPDU, the first sequence, the second sequence, the third sequence, the fourth sequence, the fifth sequence, and the like, refer to the descriptions in the foregoing method embodiments. Details are not described herein again.

For specific implementations of the embodiments shown in FIG. 10, refer to the foregoing embodiments. Details are not described herein again.

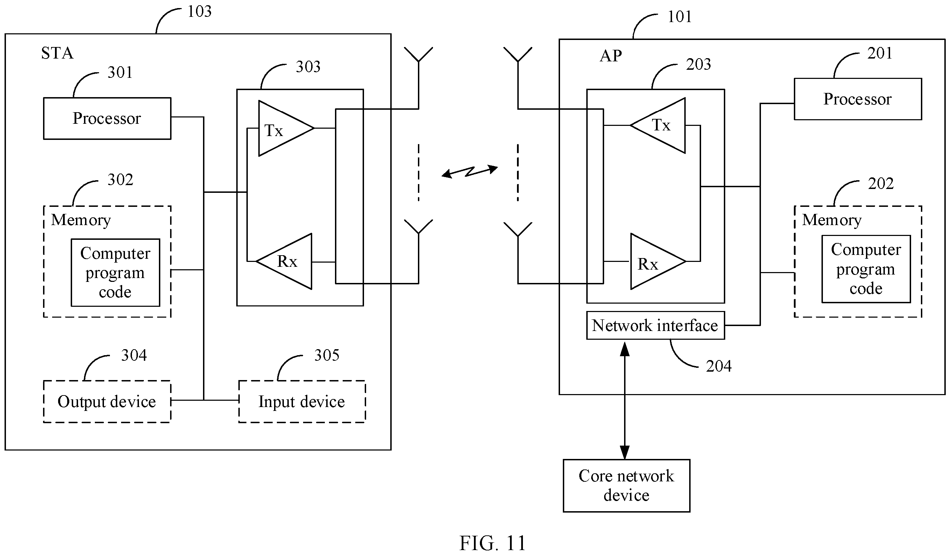

An embodiment of this application further provides a wireless communication system. The wireless communication system includes a transmit end and a receive end. The transmit end and the receive end may be configured to perform the method in any one of the foregoing embodiments (as shown in FIG. 2). FIG. 11 is a diagram of a structure of a communication system according to an embodiment of this application. The communication system includes an AP 101 and a STA 103. It may be understood that the transmit end shown above may be an AP or a STA, and the receive end may be an AP or a STA.

The STA 103 includes at least one processor (an example in which the STA 103 includes one processor 301 is used for description in FIG. 11) and at least one transceiver (an example in which the STA 103 includes one transceiver 303 is used for description in FIG. 11). Optionally, the STA 103 may further include at least one memory (an example in which the STA 103 includes one memory 302 is used for description in FIG. 11), at least one output device (an example in which the STA 103 includes one output device 304 is used for description in FIG. 11), and at least one input device (an example in which the STA 103 includes one input device 305 is used for description in FIG. 11). The processor 301, the memory 302, and the transceiver 303 are connected through a communication line. The communication line may include a path for transmitting information between the foregoing components. For related descriptions of the processor, the memory, and the transceiver, refer to the foregoing descriptions. Details are not described herein again.

For example, the memory 302 is configured to store computer-executable instructions for performing the solutions in this application, and the processor 301 controls execution. Specifically, the processor 301 is configured to execute the computer-executable instructions stored in the memory 302, to implement the communication method based on the PPDU in embodiments of this application.

The AP 101 includes at least one processor (an example in which the AP 101 includes one processor 201 is used for description in FIG. 11), at least one transceiver (an example in which the AP 101 includes one transceiver 203 is used for description in FIG. 11), and at least one network interface (an example in which the AP 101 includes one network interface 204 is used for description in FIG. 11). Optionally, the AP 101 may further include at least one memory (an example in which the AP 101 includes one memory 202 is used for description in FIG. 11). The processor 201, the memory 202, the transceiver 203, and the network interface 204 are connected through a communication line. The network interface 204 is configured to connect to a core network device through a link (for example, an S1 interface), or connect to a network interface of another AP through a wired or wireless link (for example, an X2 interface) (not shown in FIG. 11). This is not specifically limited in embodiments of this application. For related descriptions of the processor, the memory, and the transceiver, refer to the foregoing descriptions. Details are not described herein again.

For example, the memory may be configured to store at least one of the first sequence, the second sequence, the third sequence, the fourth sequence, and the fifth sequence shown above. For example, the memory may be configured to store at least one of the following: a sequence carried in a first STF (that is, a final result of the first STF obtained based on a second STF and the first sequence) and a sequence carried in a first LTF (that is, a final result of the first LTF obtained based on a second LTF and the second sequence). Certainly, the memory may be further disposed outside the chip. For example, the chip may obtain the first sequence to the fifth sequence from a memory connected to the chip, or obtain a sequence carried in a first STF and/or a sequence carried in a first LTF.

It may be understood that the structure shown in FIG. 11 does not constitute a specific limitation on the AP and the STA. For example, in some other embodiments of this application, the STA 103 may include more or fewer components than those shown in the figure, some components may be combined, some components may be split, or the components may be differently arranged. The components shown in the figure may be implemented by hardware, software, or a combination of software and hardware.

In addition, this application further provides a computer program. The computer program is used to implement operations and/or processing performed by the transmit end in the method provided in this application.

This application further provides a computer program. The computer program is used to implement operations and/or processing performed by the receive end in the method provided in this application.

This application further provides a computer-readable storage medium. The computer-readable storage medium stores computer code. When the computer code is run on a computer, the computer is enabled to perform operations and/or processing performed by the transmit end in the method provided in this application.

This application further provides a computer-readable storage medium. The computer-readable storage medium stores computer code. When the computer code is run on a computer, the computer is enabled to perform operations and/or processing performed by the receive end in the method provided in this application.

This application further provides a computer program product. The computer program product includes computer code or a computer program. When the computer code or the computer program is run on a computer, operations and/or processing performed by the transmit end in the method provided in this application are/is performed.

This application further provides a computer program product. The computer program product includes computer code or a computer program. When the computer code or the computer program is run on a computer, operations and/or processing performed by the receive end in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method based on a physical layer protocol data unit PPDU, wherein the method comprises:

   generating the PPDU, wherein the PPDU comprises a legacy short training field L-STF, a legacy long training field L-LTF, a legacy signal L-SIG field, and a first STF, the first STF is obtained based on a second STF and a first sequence, and a time length of the first STF is greater than a time length of the L-STF; and
   sending the PPDU.

2. A communication method based on a physical layer protocol data unit PPDU, wherein the method comprises:

   receiving the PPDU, wherein the PPDU comprises a legacy short training field L-STF, a legacy long training field L-LTF, a legacy signal L-SIG field, and a first STF, the first STF is obtained based on a second STF and a first sequence, and a time length of the first STF is greater than a time length of the L-STF; and
   processing the PPDU.

3. The method according to claim 1 or 2, wherein that the first STF is obtained based on a second STF and a first sequence comprises:

   the first STF is obtained based on the L-STF and the first sequence; or
   the first STF is obtained based on an extremely high throughput EHT-STF and the first sequence; or
   the first STF is obtained based on a high efficient HE-STF and the first sequence.

4. The method according to claim 3, wherein that the first STF is obtained based on the L-STF and the first sequence comprises:

   the first STF is obtained by extending an orthogonal frequency division multiplexing OFDM symbol in the L-STF by using the first sequence; or
   the first STF is obtained by extending a part of an OFDM symbol in the L-STF by using the first sequence.

5. The method according to any one of claims 1 to 4, wherein the PPDU further comprises a first LTF, the first LTF is obtained based on a second LTF and a second sequence, and a time length of the first LTF is greater than a time length of the L-LTF.

6. The method according to claim 5, wherein that the first LTF is obtained based on a second LTF and a second sequence comprises:

the first LTF is obtained by extending an OFDM symbol in the second LTF by using the second sequence; or
the first LTF is obtained by extending a part of an OFDM symbol in the second LTF by using the second sequence.

7. The method according to any one of claims 1 to 6, wherein the PPDU further comprises a first SIG field, a time length of the first SIG field is greater than a time length of the L-SIG field, and the first SIG field is obtained based on a fourth sequence and an OFDM symbol generated based on at least one of the following information: a service set color, an association identifier, a cyclic redundancy check, a tail bit, and a modulation and coding scheme.

8. The method according to any one of claims 1 to 7, wherein the PPDU further comprises a first data field, and the first data field is obtained based on a fifth sequence and an OFDM symbol generated based on an information bit.

9. The method according to any one of claims 5 to 8, wherein the first sequence is obtained based on a Barker code, and/or the second sequence is obtained based on a Barker code.

10. The method according to any one of claims 1 to 9, wherein the PPDU further comprises a first binary phase shift keying BPSK mark field and a second BPSK mark field; and

the first BPSK mark field or the second BPSK mark field is the same as the L-SIG field; or
the first BPSK mark field or the second BPSK mark field is obtained based on the L-SIG field and a third sequence.

11. The method according to claim 10, wherein elements in the third sequence comprise -1 and +1.

12. The method according to any one of claims 1 to 11, wherein the PPDU further comprises at least one of a repeated legacy signal RL-SIG field or a universal signal U-SIG field.

13. The method according to claim 11, wherein the U-SIG field comprises at least one piece of the following information:

a physical layer version of the PPDU and a format of the PPDU, wherein
a version number of the physical layer version of the PPDU is greater than 0, and the format of the PPDU indicates that the format of the PPDU is an extended range PPDU format.

14. The method according to any one of claims 8 to 13, wherein the L-STF, the L-LTF, and the L-SIG field are comprised in a first part of the PPDU, the first STF, the first LTF, and the first SIG field are comprised in a second part of the PPDU, and a bandwidth of the first part is greater than a bandwidth of the second part.

15. The method according to any one of claims 8 to 14, wherein the processing the PPDU comprises at least one of the following:

performing cross-correlation or auto-correlation on the first STF; and
performing maximum likelihood combining on at least one of the first LTF, the first SIG field, and the first data field.

16. A communication apparatus, wherein the apparatus comprises:

a processing unit, configured to generate a physical layer protocol data unit PPDU, wherein the PPDU comprises a legacy short training field L-STF, a legacy long training field L-LTF, a legacy signal L-SIG field, and a first STF, the first STF is obtained based on a second STF and a first sequence, and a time length of the first STF is greater than a time length of the L-STF; and
a transceiver unit, configured to send the PPDU.

17. A communication apparatus, wherein the apparatus comprises:

a transceiver unit, configured to receive a physical layer protocol data unit PPDU, wherein the PPDU comprises a legacy short training field L-STF, a legacy long training field L-LTF, a legacy signal L-SIG field, and a first STF, the first STF is obtained based on a second STF and a first sequence, and a time length of the first STF is greater than a time length of the L-STF; and
a processing unit, configured to process the PPDU.

18. The apparatus according to claim 16 or 17, wherein that the first STF is obtained based on a second STF and a first sequence comprises:

the first STF is obtained based on the L-STF and the first sequence; or
the first STF is obtained based on an extremely high throughput EHT-STF and the first sequence; or
the first STF is obtained based on a high efficient HE-STF and the first sequence.

19. The apparatus according to claim 18, wherein that the first STF is obtained based on the L-STF and the first sequence comprises:

the first STF is obtained by extending an orthogonal frequency division multiplexing OFDM symbol in the L-STF by using the first sequence; or
the first STF is obtained by extending a part of an OFDM symbol in the L-STF by using the first sequence.

20. The apparatus according to any one of claims 16 to 19, wherein the PPDU further comprises a first LTF, the first LTF is obtained based on a second LTF and a second sequence, and a time length of the first LTF is greater than a time length of the L-LTF.

21. The apparatus according to claim 20, wherein that the first LTF is obtained based on a second LTF and a second sequence comprises:

the first LTF is obtained by extending an OFDM symbol in the second LTF by using the second sequence; or
the first LTF is obtained by extending a part of an OFDM symbol in the second LTF by using the second sequence.

22. The apparatus according to any one of claims 16 to 21, wherein the PPDU further comprises a first SIG field, a time length of the first SIG field is greater than a time length of the L-SIG field, and the first SIG field is obtained based on a fourth sequence and an OFDM symbol generated based on at least one of the following information: a service set color, an association identifier, a cyclic redundancy check, a tail bit, and a modulation and coding scheme.

23. The apparatus according to any one of claims 16 to 22, wherein the PPDU further comprises a first data field, and the first data field is obtained based on a fifth sequence and an OFDM symbol generated based on an information bit.

24. The apparatus according to any one of claims 20 to 23, wherein the first sequence is obtained based on a Barker code, and/or the second sequence is obtained based on a Barker code.

25. The apparatus according to any one of claims 16 to 24, wherein the PPDU further comprises a first binary phase shift keying BPSK mark field and a second BPSK mark field; and

the first BPSK mark field or the second BPSK mark field is the same as the L-SIG field; or
the first BPSK mark field or the second BPSK mark field is obtained based on the L-SIG field and a third sequence.

26. The apparatus according to claim 25, wherein elements in the third sequence comprise -1 and +1.

27. The apparatus according to any one of claims 16 to 26, wherein the PPDU further comprises at least one of a repeated legacy signal RL-SIG field or a universal signal U-SIG field.

28. The apparatus according to claim 27, wherein the U-SIG field comprises at least one piece of the following information:

a physical layer version of the PPDU and a format of the PPDU, wherein
a version number of the physical layer version of the PPDU is greater than 0, and the format of the PPDU indicates that the format of the PPDU is an extended range PPDU format.

29. The apparatus according to any one of claims 16 to 28, wherein the L-STF, the L-LTF, and the L-SIG field are comprised in a first part of the PPDU, the first STF, the first LTF, and the first SIG field are comprised in a second part of the PPDU, and a bandwidth of the first part is greater than a bandwidth of the second part.

30. The apparatus according to any one of claims 23 to 29, wherein
the processing unit is specifically configured to: perform cross-correlation or auto-correlation on the first STF; and/or perform maximum likelihood combining on at least one of the first LTF, the first SIG field, and the first data field.

31. A communication apparatus, comprising a processor and a memory, wherein

the memory is configured to store instructions; and
the processor is configured to execute the instructions, so that the method according to any one of claims 1 to 15 is performed.

32. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 15 is performed.

33. A computer-readable storage medium, wherein the computer-readable storage medium is configured to store a computer program; and when the computer program is executed, the method according to any one of claims 1 to 15 is performed.

34. A computer program, wherein when the computer program is executed, the method according to any one of claims 1 to 15 is performed.

35. A communication system, comprising a transmit end and a receive end, wherein the transmit end is configured to perform the method according to any one of claims 1 and 3 to 15, and the receive end is configured to perform the method according to any one of claims 2 to 15.

FIG. 1

FIG. 2

| First part | | | | | Second part |
|---|---|---|---|---|---|
| L-STF Legacy short training field | L-LTF Legacy long training field | L-SIG Legacy signal field | ER BPSK Mark 1 ER BPSK mark 1 symbol | ER BPSK Mark 2 ER BPSK mark 2 symbol | ... |
| 8 microseconds | 8 microseconds | 4 microseconds | 4 microseconds | 4 microseconds | |

FIG. 3a

EP 4 510 490 A1

| First part | | | | | Second part |
|---|---|---|---|---|---|
| L-STF Legacy short training field | L-LTF Legacy long training field | L-SIG Legacy signal field | ER BPSK Mark 1 ER BPSK mark 1 symbol | ER BPSK Mark 2 ER BPSK mark 2 symbol | ... |
| 8 microseconds | 8 microseconds | 4 microseconds | 4 microseconds | 4 microseconds | |

FIG. 3b

| First part | | | | | Second part |
|---|---|---|---|---|---|
| L-STF Legacy short training field | L-LTF Legacy long training field | L-SIG Legacy signal field | ER BPSK Mark 1 ER BPSK mark 1 symbol | ER BPSK Mark 2 ER BPSK mark 2 symbol | ... |
| | | | | | ... |
| 8 microseconds | 8 microseconds | 4 microseconds | 4 microseconds | 4 microseconds | |

FIG. 3c

| First part | | | | | Second part |
|---|---|---|---|---|---|
| L-STF Legacy short training field | L-LTF Legacy long training field | L-SIG Legacy signal field | RL-SIG Repeated legacy signal field | U-SIG Universal signal field | ... |
| 8 microseconds | 8 microseconds | 4 microseconds | 4 microseconds | 8 microseconds or 16 microseconds | |

FIG. 4a

| First part | | | | | Second part |
|---|---|---|---|---|---|
| L-STF Legacy short training field | L-LTF Legacy long training field | L-SIG Legacy signal field | RL-SIG Repeated legacy signal field | U-SIG Universal signal field | ... |
| 8 microseconds | 8 microseconds | 4 microseconds | 4 microseconds | 8 microseconds or 16 microseconds | |

FIG. 4b

EP 4 510 490 A1

| | First part | | | | Second part |
|---|---|---|---|---|---|
| L-STF Legacy short training field | L-LTF Legacy long training field | L-SIG Legacy signal field | RL-SIG Repeated legacy signal field | U-SIG Universal signal field | ... |
| | | | | | ... |
| 8 microseconds | 8 microseconds | 4 microseconds | 4 microseconds | 8 microseconds or 16 microseconds | |

FIG. 4c

First part

Second part

| First STF First short training field | First LTF First long training field | First SIG First signal field | First Data First data field | PE Packet extension |
|---|---|---|---|---|
| 4*n1 microseconds 8*n1 microseconds 16*n1 microseconds | 4*n2 microseconds 8*n2 microseconds 16*n2 microseconds | 4*n3 microseconds 8*n3 microseconds 16*n3 microseconds | 4*n4 microseconds 8*n4 microseconds 16*n4 microseconds | 4*n5 microseconds |

...

FIG. 5

| Non-extended range part | | | | | Extended range part | | | | |
|---|---|---|---|---|---|---|---|---|---|
| L-STF<br>Legacy<br>short<br>training<br>field | L-LTF<br>Legacy<br>long<br>training<br>field | L-SIG<br>Legacy<br>signal<br>field | ER BPSK<br>Mark 1<br>ER BPSK<br>mark 1<br>symbol | ER BPSK<br>Mark 2<br>ER BPSK<br>mark 2<br>symbol | Extended STF<br>Extended short<br>training field | Extended LTF<br>EHT long<br>training field | Extended SIG<br>Extended signal<br>field | Extended Data<br>Extended data<br>field | PE<br>Packet<br>extension |
| 8<br>microseconds | 8<br>microseconds | 4<br>microseconds | 4<br>microseconds | 4<br>microseconds | 4*n1<br>microseconds<br>8*n1<br>microseconds<br>16*n1<br>microseconds | 4*n2<br>microseconds<br>8*n2<br>microseconds<br>16*n2<br>microseconds | 4*n3<br>microseconds<br>8*n3<br>microseconds<br>16*n3<br>microseconds | 4*n4<br>microseconds<br>8*n4<br>microseconds<br>16*n4<br>microseconds | 4*n5<br>microseconds |

FIG. 6a

EP 4 510 490 A1

| Non-extended range part | | | | | Extended range part | | | | |
|---|---|---|---|---|---|---|---|---|---|
| L-STF Legacy short training field | L-LTF Legacy long training field | L-SIG Legacy signal field | ER BPSK Mark 1 ER BPSK mark 1 symbol | ER BPSK Mark 2 ER BPSK mark 2 symbol | Extended STF Extended short training field | Extended LTF EHT long training field | Extended SIG Extended signal field | Extended Data Extended data field | PE Packet extension |
| 8 microseconds | 8 microseconds | 4 microseconds | 4 microseconds | 4 microseconds | 4*n1 microseconds | 4*n2 microseconds | 4*n3 microseconds | 4*n4 microseconds | 4*n5 microseconds |
| | | | | | 8*n1 microseconds | 8*n2 microseconds | 8*n3 microseconds | 8*n4 microseconds | |
| | | | | | 16*n1 microseconds | 16*n2 microseconds | 16*n3 microseconds | 16*n4 microseconds | |

FIG. 6b

| | Non-extended range part | | | | Extended range part | | | | |
|---|---|---|---|---|---|---|---|---|---|
| L-STF Legacy short training field | L-LTF Legacy long training field | L-SIG Legacy signal field | ER BPSK Mark 1 ER BPSK mark 1 symbol | ER BPSK Mark 2 ER BPSK mark 2 symbol | Extended STF Extended short training field | Extended LTF EHT long training field | Extended SIG Extended signal field | Extended Data Extended data field | PE Packet extension |
| | | | | | Extended STF Extended short training field | Extended LTF EHT long training field | Extended SIG Extended signal field | Extended Data Extended data field | PE Packet extension |
| 8 microseconds | 8 microseconds | 4 microseconds | 4 microseconds | 4 microseconds | 4*n1 microseconds | 4*n2 microseconds | 4*n3 microseconds | 4*n4 microseconds | 4*n5 microseconds |
| | | | | | 8*n1 microseconds | 8*n2 microseconds | 8*n3 microseconds | 8*n4 microseconds | |
| | | | | | 16*n1 microseconds | 16*n2 microseconds | 16*n3 microseconds | 16*n4 microseconds | |

FIG. 6c

| Non-extended range part | | | | | Extended range part | | | | |
|---|---|---|---|---|---|---|---|---|---|
| L-STF Legacy short training field | L-LTF Legacy long training field | L-SIG Legacy signal field | RL-SIG Repeated legacy signal field | U-SIG Universal signal field | Extended STF Extended short training field | Extended LTF EHT long training field | Extended SIG Extended signal field | Extended Data Extended data field | PE Packet extension |
| 8 microseconds | 8 microseconds | 4 microseconds | 4 microseconds | 8 microseconds or 16 microseconds | $4*n1$ microseconds | $4*n2$ microseconds | $4*n3$ microseconds | $4*n4$ microseconds | $4*n5$ microseconds |
| | | | | | $8*n1$ microseconds | $8*n2$ microseconds | $8*n3$ microseconds | $8*n4$ microseconds | |
| | | | | | $16*n1$ microseconds | $16*n2$ microseconds | $16*n3$ microseconds | $16*n4$ microseconds | |

FIG. 7a

EP 4 510 490 A1

| Non-extended range part | | | | | Extended range part | | | | |
|---|---|---|---|---|---|---|---|---|---|
| L-STF Legacy short training field | L-LTF Legacy long training field | L-SIG Legacy signal field | RL-SIG Repeated legacy signal field | U-SIG Universal signal field | Extended STF Extended short training field | Extended LTF EHT long training field | Extended SIG Extended signal field | Extended Data Extended data field | PE Packet extension |
| 8 microseconds | 8 microseconds | 4 microseconds | 4 microseconds | 8 microseconds or 16 microseconds | 4*n1 microseconds | 4*n2 microseconds | 4*n3 microseconds | 4*n4 microseconds | 4*n5 microseconds |
| | | | | | 8*n1 microseconds | 8*n2 microseconds | 8*n3 microseconds | 8*n4 microseconds | |
| | | | | | 16*n1 microseconds | 16*n2 microseconds | 16*n3 microseconds | 16*n4 microseconds | |

FIG. 7b

| Non-extended range part | | | | | Extended range part | | | | |
|---|---|---|---|---|---|---|---|---|---|
| L-STF Legacy short training field | L-LTF Legacy long training field | L-SIG Legacy signal field | RL-SIG Repeated legacy signal field | U-SIG Universal signal field | Extended STF Extended short training field | Extended LTF EHT long training field | Extended SIG Extended signal field | Extended Data Extended data field | PE Packet extension |
| | | | | | Extended STF Extended short training field | Extended LTF EHT long training field | Extended SIG Extended signal field | Extended Data Extended data field | PE Packet extension |
| 8 microseconds | 8 microseconds | 4 microseconds | 4 microseconds | 8 microseconds or 16 microseconds | $4*n1$ microseconds | $4*n2$ microseconds | $4*n3$ microseconds | $4*n4$ microseconds | $4*n5$ microseconds |
| | | | | | $8*n1$ microseconds | $8*n2$ microseconds | $8*n3$ microseconds | $8*n4$ microseconds | |
| | | | | | $16*n1$ microseconds | $16*n2$ microseconds | $16*n3$ microseconds | $16*n4$ microseconds | |

FIG. 7c

801

Processing unit

802

Transceiver unit

Communication apparatus

FIG. 8

90

910

Transceiver

920

Processor

940

930

Memory

FIG. 9

FIG. 10

FIG. 11

## INTERNATIONAL SEARCH REPORT

| | International application No. |
|---|---|
| | **PCT/CN2023/090914** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, CNKI, VEN, ENTXT, DWPI, 3GPP: 物理层协议数据单元, PPDU, 传统短训练字段, L-STF, 传统长训练字段, L-LTF, 传统信令, L-SIG, 第一, 第二, 时长, 大于, 极高吞吐率, EHT-STF, 高效率, HE-STF, OFDM符号, 序列, 扩展, 服务集, 关联标识, 循环冗余校验, 尾部比特, 编码与调制策略, 巴克码, 二进制相移键控, BPSK, 重复传统信令, RL-SIG, 通用信令, U-SIG; Physical layer protocol data unit, legacy short training field, legacy long training field, legacy signaling, first, second, duration, greater than, very high throughput rate, high efficiency, OFDM symbol, sequence, extension, service set, association identification, cyclic redundancy check, tail bits, coding and modulation strategy, Barker code, binary phase shift keying, repeated legacy signaling, general signaling

**C. DOCUMENTS CONSIDERED TO BE RELEVANT**

| Category* | Citation of document, with indication, where appropriate, of the relevant passages | Relevant to claim No. |
|---|---|---|
| A | CN 114342300 A (TELEFONAKTIEBOLAGET LM ERICSSON (PUBL)) 12 April 2022 (2022-04-12)<br>entire document | 1-35 |
| A | CN 114070697 A (HUAWEI TECHNOLOGIES CO., LTD.) 18 February 2022 (2022-02-18)<br>entire document | 1-35 |
| A | CN 114245980 A (LG ELECTRONICS INC.) 25 March 2022 (2022-03-25)<br>entire document | 1-35 |
| A | CN 114339893 A (HUAWEI TECHNOLOGIES CO., LTD.) 12 April 2022 (2022-04-12)<br>entire document | 1-35 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 August 2023** | **10 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/090914** |

**C.     DOCUMENTS CONSIDERED TO BE RELEVANT**

| Category* | Citation of document, with indication, where appropriate, of the relevant passages | Relevant to claim No. |
|---|---|---|
| A | US 2019109681 A1 (INTERDIGITAL PATENT HOLDINGS, INC.) 11 April 2019 (2019-04-11)<br>entire document | 1-35 |
| A | WO 2021029552 A1 (LG ELECTRONICS INC.) 18 February 2021 (2021-02-18)<br>entire document | 1-35 |

Form PCT/ISA/210 (second sheet) (July 2022)

| INTERNATIONAL SEARCH REPORT | | | | International application No. | | | |
|---|---|---|---|---|---|---|---|
| Information on patent family members | | | | **PCT/CN2023/090914** | | | |

| Patent document cited in search report | | | Publication date (day/month/year) | Patent family member(s) | | | Publication date (day/month/year) |
|---|---|---|---|---|---|---|---|
| CN | 114342300 | A | 12 April 2022 | EP | 4161140 | A1 | 05 April 2023 |
| | | | | EP | 3997906 | A1 | 18 May 2022 |
| | | | | EP | 3997906 | B1 | 07 December 2022 |
| | | | | KR | 20220034770 | A | 18 March 2022 |
| | | | | MX | 2022000473 | A | 03 February 2022 |
| | | | | US | 2022256596 | A1 | 11 August 2022 |
| | | | | JP | 2022540821 | A | 20 September 2022 |
| | | | | WO | 2021008746 | A1 | 21 January 2021 |
| CN | 114070697 | A | 18 February 2022 | None | | | |
| CN | 114245980 | A | 25 March 2022 | EP | 4016945 | A1 | 22 June 2022 |
| | | | | WO | 2021029552 | A1 | 18 February 2021 |
| | | | | KR | 20220019807 | A | 17 February 2022 |
| | | | | US | 2022278877 | A1 | 01 September 2022 |
| CN | 114339893 | A | 12 April 2022 | None | | | |
| US | 2019109681 | A1 | 11 April 2019 | EP | 4221045 | A1 | 02 August 2023 |
| | | | | EP | 2724488 | A1 | 30 April 2014 |
| | | | | EP | 2724488 | B1 | 25 January 2023 |
| | | | | TW | 201308960 | A | 16 February 2013 |
| | | | | TWI | 574533 | B | 11 March 2017 |
| | | | | US | 11611414 | B2 | 21 March 2023 |
| | | | | US | 2012327871 | A1 | 27 December 2012 |
| | | | | KR | 20210005958 | A | 15 January 2021 |
| | | | | KR | 102273748 | B1 | 06 July 2021 |
| | | | | WO | 2012177993 | A1 | 27 December 2012 |
| | | | | KR | 20140053128 | A | 07 May 2014 |
| | | | | US | 2023231669 | A1 | 20 July 2023 |
| WO | 2021029552 | A1 | 18 February 2021 | None | | | |

Form PCT/ISA/210 (patent family annex) (July 2022)

**REFERENCES CITED IN THE DESCRIPTION**

**Patent documents cited in the description**

- CN 202210509427